# EUROPEAN PATENT APPLICATION

(11) **EP 3 311 984 A1**
(43) Date of publication of application: **25.04.2018**
(21) Application number: 17197015.5
(22) Date of filing: 18.10.2017
(51) Int. Cl.: B29C 64/165, B33Y 10/00, B33Y 70/00, B29K 105/00

(54) **POWDER MATERIAL FOR SOLID FREEFORM FABRICATION, MATERIAL SET OF SOLID FREEFORM FABRICATION, DEVICE FOR MANUFACTURING SOLID FREEFORM FABRICATION OBJECT, AND METHOD OF MANUFACTURING SOLID FREEFORM FABRICATION OBJECT**

(30) Priority: 20.10.2016 JP 2016206304
(71) Applicant: Ricoh Company Ltd., Ohta-ku Tokyo 143-8555 (JP)
(72) Inventor: KUSAHARA, Teruki, Ohta-ku, Tokyo 143-8555 (JP); IWATSUKI, Hitoshi, Ohta-ku, Tokyo 143-8555 (JP); TAMOTO, Nozomu, Ohta-ku, Tokyo 143-8555 (JP)
(74) Representative: White, Duncan Rohan

(57) **Abstract**

A powder material for solid freeform fabrication includes large particles and small particles having a diameter of 1/5 or less of that of the large particles, characterized in that the large particles have a larger volume ratio than the small particles.

## Description

### BACKGROUND

### Technical Field

The present disclosure relates to a powder material for solid freeform fabrication, a material set for solid freeform fabrication, a device for manufacturing a solid freeform fabrication object, and a method of manufacturing a solid freeform fabrication object.

### Description of the Related Art

Demand for manufacturing complex solid free-form fabrication (three-dimensional) objects is increasing. A typical method of manufacturing three-dimensional (3D) objects utilizing a mold is too limited to manufacture complex and fine modeling objects. Also, it is not suitable for small-lot production because such a mold is expensive. On the other hand, solid freeform fabrication (also referred to as additive manufacturing) of directly manufacturing a solid freeform fabrication object (3D object) while laminating various material using form data is appealing as a method suitable to solve these issues.

The solid freeform fabrication includes many methods such as a powder sintering lamination method, a stereolithography, a thermal fusion lamination method, a material jet method, and a binder jet method. Of these, the binder jet method using an inkjet head has an advantage that fabrication speed is high. However, the dimension accuracy of an obtained solid freeform fabrication object is poor. One of the reasons why the dimension accuracy is poor is inferred that nozzle clogging tends to occur since liquid material (ink) for solid form fabrication having a relatively high viscosity is discharged from an inkjet nozzle. Therefore, for example, a method of manufacturing a solid freeform fabrication object has been proposed in which a binder resin is mixed with powder material for solid freeform fabrication and the ink is discharged.

In addition, another thinkable reason is that, after the ink is jetted to a layer of powder material for solid freeform fabrication and lands thereon, the ink spreads in the layer of the powder material for solid freeform fabrication. That is, the ink spreads wider than the area based on the image data actually output, which leads to degradation of the dimension accuracy. Therefore, for example, methods have been proposed in which a heat source is used to heat and dry ink after landing of the ink, thereby preventing the ink from spreading.

### SUMMARY

According to an embodiment of the present disclosure, provided is an improved powder material for solid freeform fabrication which includes large particles and small particles having a diameter of 1/5 or less of that of the large particles, characterized in that the large particles have a larger volume ratio than the small particles.

### BRIEF DESCRIPTION OF THE SEVERAL VIEWS OF THE DRAWINGS

Various other objects, features and attendant advantages of the present disclosure will be more fully appreciated as the same becomes better understood from the detailed description when considered in connection with the accompanying drawings in which like reference characters designate like corresponding parts throughout and wherein:

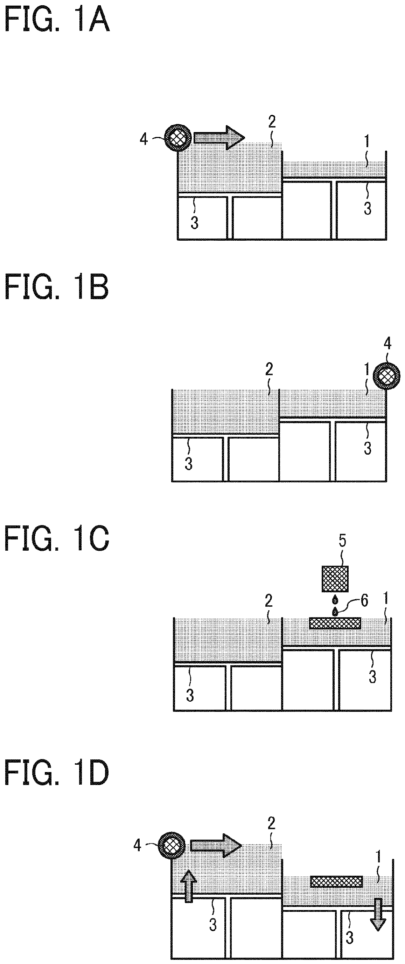

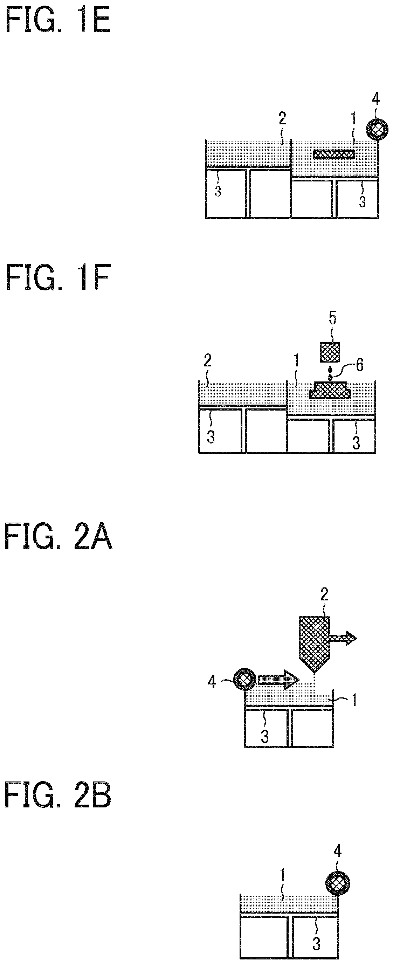

FIG. 1A is a schematic diagram illustrating an example of the process of supplying a powder material for solid freeform fabrication from a powder storage tank for supplying to a powder storage tank for fabrication in the manufacturing process of a solid freeform fabrication object (3D object) according to an embodiment of the present disclosure;
FIG. 1B is a schematic diagram illustrating an example of the process of forming a powder material layer for solid freeform fabrication having a smooth surface by the powder material layer forming device for solid freeform fabrication in the manufacturing process of a solid freeform fabrication object according to an embodiment of the present disclosure;
FIG. 1C is a schematic diagram illustrating an example of the process of dripping a liquid material for solid freeform fabrication to the powder material layer for solid freeform fabrication of the powder storage tank for solid freeform fabrication by a liquid material supply device for solid freeform fabrication in the manufacturing process of a solid freeform fabrication object according to an embodiment of the present disclosure;
FIG. 1D is a schematic diagram illustrating an example of a process of elevating the stage of the powder storage tank for supplying and lowering the stage of the powder to control the gap therebetween to obtain a desired layer thickness in the manufacturing process of a solid freeform fabrication object according to an embodiment of the present disclosure;
FIG. IE is a schematic diagram illustrating an example of the process of, subsequent to the gap control, moving the powder material layer forming device for solid freeform fabrication again from the powder storage tank for supplying to the powder storage tank for fabrication to form a new powder material layer for solid freeform fabrication on the powder storage tank for supplying in the manufacturing process of a solid freeform fabrication object according to an embodiment of the present disclosure;
FIG. IF is a schematic diagram illustrating an example of the process of dripping a liquid material for solid freeform fabrication to the powder material layer for solid freeform fabrication of the powder storage tank for solid freeform fabrication by a liquid material supply device for solid freeform fabrication in the manufacturing process of a solid freeform fabrication object according to an embodiment of the present disclosure;
FIG. 2A is a schematic diagram illustrating another example of the process of supplying the powder material for solid freeform fabrication from a powder storage tank for supplying to a powder storage tank for fabrication in the manufacturing process of a solid freeform fabrication object according to an embodiment of the present disclosure;
FIG. 2B is a schematic diagram illustrating an example of the process of, after the powder material for solid freeform fabrication is supplied to the powder storage tank for solid freeform fabrication, controlling the gap to obtain a desired layer thickness and moving the powder material layer forming device for solid freeform fabrication to form a powder material layer for solid freeform fabrication on the powder storage tank for solid freeform fabrication in the manufacturing process of a solid freeform fabrication object according to an embodiment of the present disclosure;

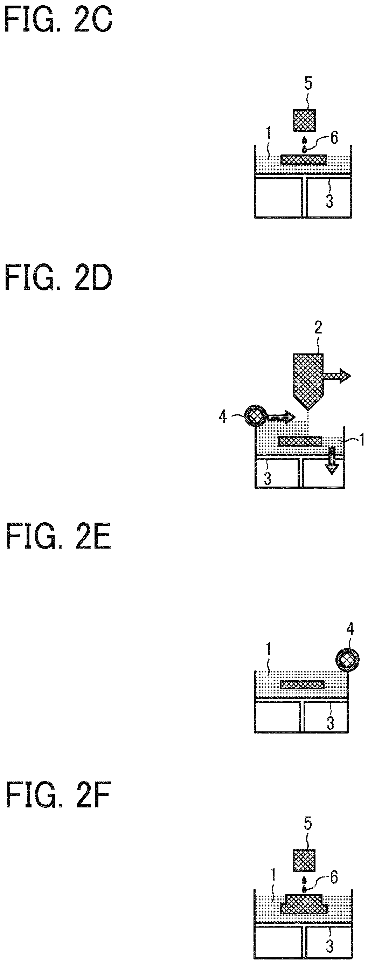

FIG. 2C is a schematic diagram illustrating an example of the process of dripping the liquid material for solid freeform fabrication to the powder material layer for solid freeform fabrication of the powder storage tank for solid freeform fabrication by the liquid material supply device for solid freeform fabrication in the manufacturing process of a solid freeform fabrication object according to an embodiment of the present disclosure;
FIG. 2D is a schematic diagram illustrating an example of the process of lowering the stage of the powder storage tank for solid freeform fabrication to supply the powder material for solid freeform fabrication from the powder storage tank for supplying to the powder storage tank for solid freeform fabrication in the manufacturing process of a solid freeform fabrication object according to an embodiment of the present disclosure;
FIG. 2E is a schematic diagram illustrating an example of the process of, after the powder material for solid freeform fabrication is supplied to the powder storage tank for solid freeform fabrication, controlling the gap to obtain a desired layer thickness and moving the powder material layer forming device for solid freeform fabrication again to form a powder material layer for solid freeform fabrication on the powder storage tank for solid freeform fabrication in the manufacturing process of a solid freeform fabrication object according to an embodiment of the present disclosure;
FIG. 2F is a schematic diagram illustrating an example of the process of dripping the liquid material for solid freeform fabrication to the powder material layer for solid freeform fabrication of the powder storage tank for solid freeform fabrication by the liquid material supply device for solid freeform fabrication in the manufacturing process of a solid freeform fabrication object according to an embodiment of the present disclosure; and

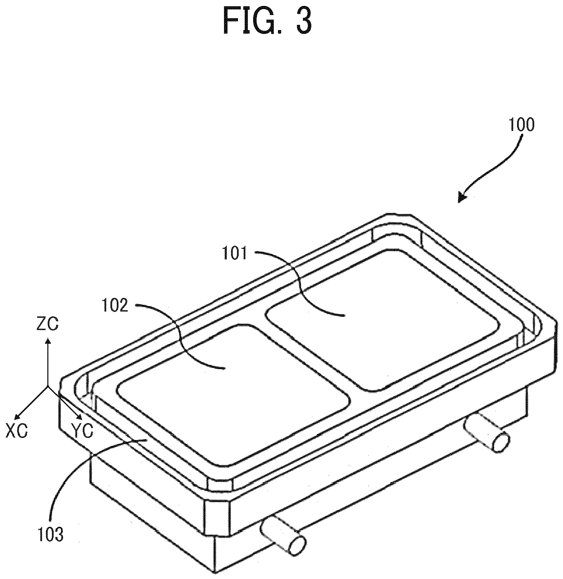

FIG. 3 is a schematic diagram illustrating an example of the powder storage tank of the device for manufacturing a solid freeform fabrication object according to an embodiment of the present disclosure.

### DESCRIPTION OF THE EMBODIMENTS

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

As used herein, the singular forms "a", "an", and "the" are intended to include the plural forms as well, unless the context clearly indicates otherwise.

Moreover, image forming, recording, printing, modeling, etc. in the present disclosure represent the same meaning, unless otherwise specified.

### Powder Material for Solid Freeform Fabrication

The powder material for solid freeform fabrication contains two kinds particles, which are large particles and small particles having a diameter of 1/5 or less of that of the large particles, and other kinds of optional particles. The large particles have a larger volume ratio than the small particles. The powder material may contain other optional components.

The powder material for solid freeform fabrication of the present disclosure is based on the knowledge that, in a typical method of heating and drying liquid material for solid freeform fabrication using a heat source after landing of the liquid material for solid freeform fabrication, the time to be taken before starting heating is relatively long in comparison with the time to be taken for spreading of the liquid material, which makes it difficult to prevent spreading of the liquid material and stably obtain a solid freeform fabrication object with a high dimension accuracy.

As a result of the investigation on spreading of liquid material for solid freeform fabrication utilizing a binder jet method, the present inventors have found that if powder material for solid freeform fabrication includes large particles, small particles having a diameter of 1/5 of that of the large particles, and other optional particles and preferably the volume average particle diameter of the large particles and the small particles is controlled within a suitable range, a liquid material for solid freeform fabrication can be suitably held in the gap between the large particles and the small particles so that a solid freeform fabrication object can be suitably manufactured with a high dimension accuracy.

Therefore, the powder material for solid freeform fabrication of the present disclosure includes large particles, small particles having a diameter of 1/5 or less of that of the large particles, and other optional particles and the volume ratio of the large particles is greater than the volume ratio of the small particles. In addition, the volume ratio of the large particles is preferably from 65 to 85 percent. The volume ratio of the small particles is preferably from 15 to 35 percent.

When the diameter of the small particle is 1/5 or less of the diameter of the large particle, the liquid material for solid freeform fabrication can be suitably held in the gap between the large particle and the small particle. As a result, a solid freeform fabrication object having a high dimension accuracy can be stably manufactured.

When the volume ratio of the large particle is from 65 to 85 percent and the volume ratio of the small particle is from 15 to 35 percent, holding property of the liquid material at the landing of the droplets of the liquid material is good so that a solid freeform fabrication object having a stable dimension accuracy can be obtained. In addition, sintering of a solid freeform fabrication object is good and the density of a sintered compact is high, which may lead to improvement of strength.

The volume average particle diameter of the large particle is preferably from 25 to 85 µm and more preferably from 35 to 50 µm.

The volume average particle diameter of the small particle is preferably 20 µm or less and more preferably from 5 to 12 µm.

When the volume average particle diameter of the large particle and the volume average particle diameter of the small particle are within the ranges, holding property of the liquid material at the landing of the droplets of the liquid material is good so that a solid freeform fabrication object having a stable dimension accuracy can be obtained. In addition, sintering of a solid freeform fabrication object becomes good and the density of a sintered compact increases, which may lead to improvement of strength.

The volume average particle diameter of the large particle and the small particle can be measured by a known particle size measuring device, such as Microtrac MT3000II series (manufactured by MicrotracBEL Corp.).

The powder material for solid freeform fabrication includes large particles, small particles having a diameter of 1/5 or less of that of the large particle, and other optional particles.

The large particle preferably contains a large core particle, more preferably the large core particle and a resin, and furthermore preferably a resin-coated large particle in which the surface of the large core particle is coated with the resin.

The small particle preferably contains a small core particle, more preferably the small core particle and a resin, and furthermore preferably a resin-coated small particle in which the surface of the small core particle is coated with the resin.

If the large particle and the small particle contain no resin, it is preferable to add a resin to the liquid material for solid freefrom fabrication.

### Large Particle and Small Particle

The material of the large core particle and the small core particle has no particular limit and can be suitably selected to suit to a particular application. For example, metal, ceramics, glass, carbon, resin material, wood, biocompatible material, sand, and magnetic material are usable. These can be used alone or in combination. Of these, metal, ceramics, magnetic material, and resin material, which are finally bearable to sintering are preferable in terms of manufacturing a sintered compact having an extremely high level of strength.

The metal has no particular limit and can be suitably selected to suit to a particular application as long as material contains the metal is selected. Specific examples of the metal include, but are not limited to, Mg, Al, Ti, V, Cr, Mn, Fe, Co, Ni, Cu, Zn, Y, Zr, Nb, Mo, Pd, Ag, In, Sn, Ta, W, Nd, Sm, and alloys thereof. Of these, stainless (SUS) steel, iron, copper, silver, titanium, zirconium, or alloys thereof are preferable.

Specific examples of the stainless (SUS) steel include, but are not limited to, SUS304, SUS316, SUS317, SUS329, SUS410, SUS430, SUS440, and SUS630.

Examples of the ceramics are oxides, carbides, nitrides, hydroxides, etc. Of these, oxides are preferable.

The oxide has no particular limit and can be suitably selected to suit to a particular application. Specific examples include, but are not limited to, silica (SiO₂), alumina (Al₂O₃), zirconia (ZrO₂), and titania (TiO₂).

The magnetic material can be selected from articles having a strong magnetic property to suit to a particular application. Specific example include, but are not limited to, Fe, Co, Ni, Nd, Sm, alloys thereof, or oxides thereof such as ferrite magnet, samarium-cobalt magnet, nneodymium magnet, and alnico magnet.

As the resin material, thermoplastic resins are normally used. Examples are polyethylene (PE), copolymers of ethylene and vinyl chloride (EVA), polypropylene (PP), polystyrene (PS), copolymers of styrene and acrylonitrile (AS), copolymers of acrylonitrile, styrene, and butadiene (ABS), polyvinylchloride (PVC), polycarbonate (PC), polyamide (PA), acrylic resins (PMMA), and fluorochemical resins (PVDF, PTFE),

The large core particle and the small core particle are available on the market. Specific examples of such products include, but are not limited to, PSS316L as stainless steel, manufactured by Sanyo Special Steel Co., Ltd.), EXCELICA SE-15K as silica, manufactured by Tokuyama Corporation), TAIMICRON TM-5D as alumina, manufactured by TAIMEI CHEMICALS Co., Ltd.), and TZ-B53 as zirconia, manufactured by TOSOH CORPORATION).

The large core particle and the small core particle can be subject to surface treatment using a surface treatment agent. This is suitable to improve attachability of resin and coating property. The surface treatment has no particular limit. Known surface treatment agents are usable.

The volume average particle diameter of the large core particle is preferably from 25 to 85 µm and more preferably from 35 to 50 µm.

The volume average particle diameter of the small core particle is preferably less than 20 µm and more preferably from 5 to 12 µm.

When the volume average particle diameter of the large core particle and the volume average particle diameter of the small core particle are within the ranges, holding property of the liquid material at the time of landing of the droplets of the liquid material is good so that a solid freeform fabrication object having a stable dimension accuracy can be obtained. In addition, sintering of a solid freeform fabrication object becomes good and the density of a sintered compact increases, which may lead to improvement of strength.

The volume average particle diameter of the large core particle and the small core particle has no particular limit and a known particle diameter measuring device can be used to measure the volume average particle diameter. A specific example is a particle size distribution measuring device (Microtrac MT3000II series, manufactured by MicrotracBEL Corp.).

As the method of manufacturing the large core particle and the small core particle has no particular limit and known methods can be used to manufacture the core particles. For example, a pulverization method of pulverizing a solid by compression, impact, friction, etc., an atomizing method of spraying a molten metal to obtain quenched powder, a precipitation method of precipitating a component dissolved in a liquid, and a gas-phase reaction method of gasification for crystallization can be utilized. Of these, the atomize method is preferable in terms of obtaining a spherical form and less fluctuation regarding the particle size.

Examples of the atomizing method are a water atomizing method, a gas atomizing method, a centrifugal atomizing method, and plasma atomizing method.

### Resin

The resin has no particular limit. Preferably, such a resin is dissoluble in liquid material for solid freeform fabrication and cross-linkable due to acting of a cross-linking agent contained in the liquid material.

Dissolution property of the resin means that, for example, when 1 g of the resin mentioned above is mixed and stirred in 100 g of a solvent constituting a liquid material for solid freeform fabrication at 30 degrees C, 90 percent by mass or more of the resin is dissolved therein.

In addition, as the resin, 4 percent by mass (w/w percent) solution of the resin preferably has a viscosity at 20 degrees C of 40 mPa• s or less, more preferably from 1 mPa• s to 35 mPa• s, and particularly preferably from 5 to 30 mPa• s.

When the viscosity is 40 mPa• s or less, the strength of the cured object (solid freeform fabrication object) of the powder material (layer) for solid freeform fabrication formed by applying the liquid material for solid freeform fabrication to the powder material for solid freeform fabrication is improved, which makes it free of problems such as losing shape during processing such as sintering conducted after the layer forming or handling.

In addition, dimension accuracy of a cured object (solid freeform fabrication object) of the powder material (layer) for solid freeform fabrication formed by applying the liquid material for solid freeform fabrication to the powder material for solid freeform fabrication tends to be improved.

Viscosity can be measured, for example, according to the measuring method described in JIS K7117.

The resin has no particular limit and can be suitably selected to suit to a particular application. In terms of handling property and environment burden, such resins are preferably water-soluble. For example, water-soluble resins and water-soluble prepolymers are usable.

For the powder material for solid freeform fabrication using such a water-soluble resin, an aqueous medium can be used as the solvent of the liquid material for solid freeform fabrication. In addition, when the powder material is abandoned or recycled, it is easy to separate the core particle from the resin by water treatment.

Specific examples of the water-soluble resins include, but are not limited to, polyvinylalcohol resins, polyacrylic acid resins, cellulose resins, starch, gelatin, vinyl resins, amide resins, imide resins, acrylic resins, and polyethylene glycol. If these are water-soluble, homopolymers (monopolymers), heteropolymers (copolymers) are allowed. Also, such resins can be modified or known functional groups can be introduced thereinto. Moreover, salt forms are allowed.

Accordingly, for example, in the case of a polyvinyl alcohol resin, polyvinyl alcohol is suitable and modified polyvinyl alcohol modified by an acetoacetyl group, an acetyl group, or silicone (acetoacetyl group-modified polyvinyl alcohol, acetyl group-modified polyvinyl alcohol, and silicone-modified polyvinyl alcohol) are also suitable. In addition, butanediol vinyl alcohol copolymers are also an option. Moreover, in the case of a polyacrylic acid resin, polyacrylic acid and salts such as sodium polyacrylate are suitable.

In addition, in the case of a cellulose resin, for example, cellulose is suitable and carboxymethyl cellulose (CMC) is also suitable. Moreover, in the case of an acrylic resin, polyacrylic acid and a copolymer of acrylic acid and maleic anhydride are suitable.

In the case of a water-soluble prepolymer, for example, an adhesive water-soluble isocyanate prepolymer contained in a water sealant is suitable.

In addition to the water soluble resins, the following resins are suitable: acrylic acid resins, maleic acid resins, silicone resins, butyral resins, polyester resins, polyvinyl acetate resins, copolymers of vinyl chloride and vinyl acetate, polyethylene resins, polypropyle resins, polyacetal resins, copolymers of ethylene and vinyl acetate, copolymers of ethylene and(meth)acrylic acid, copolymers of α-olefin and maleic anhydride, esterified compounds of copolymers of α-olefin and maleic anhydride, polystytene resins, poly(meth)acrylates, copolymers of α-olefin, maleic anhydride, and monomers including a vinyl group, copolymers of styrene and maleic anhydride, copolymers of styrene and (meth)acrylate, polyamide resins, epoxy resins, xylene resins, ketone resins, petroleum resins, rosin or derivatives thereof, coumarone indene resins, terpene resins, polyurethane resins, and synthesized rubber such as styrene/butadiene rubber, polyvinyl butyral, nitrile rubber, acrylic rubber, and ethylene/propylene rubber, and nitrocellulose.

In the present disclosure, of these resins, resins having cross-linkable functional groups are preferable. Such cross-linkable functional groups have no specific limit and can be suitably selected to suit to a particular application.

Specific examples include, but are not limited to, hydroxyl group, carboxyl group, amide group, phosphoric acid group, thiol group, acetoacetyl group, and ether bond.

The resin having such a cross-linkable functional group is preferable in terms that the resin is easily cross-linked to form a cured material (solid freeform fabrication object).

Of these, polyvinyl alcohol resins having an average degree of polymerization of from 400 to 1,100 is preferable.

The resin can be used alone or in combination. In addition, it is suitable to synthesize such a resin and use products available on the market.

Specific examples of the products available on the market include, but are not limited to, polyvinyl alcohol (PVA-205C, PVA-220C, manufactured by KURARAY CO., LTD.), polyacrylic acids (JURYMER® AC-10, manufactured by TOAGOSEI CO., LTD.), sodium polyacrylate (JURYMER® AC-103P, manufactured by TOAGOSEI CO., LTD.), acetoacetyl group-modified polyvinyl alcohol (Gohsenx Z-300, Gohsenx Z-100, Gohsenx Z-200, Gohsenx Z-205, Gohsenx Z-210, and Gohsenx Z-220, manufactured by The Nippon Synthetic Chemical Industry Co., Ltd.), copolymers of carboxy group-modified polyvinyl alcohol (Gohsenx T-330, Gohsenx T-350, and Gohsenx T-330T, manufactured by The Nippon Synthetic Chemical Industry Co., Ltd.), copolymers of butanediol and vinyl alcohol (Nichigo G-Polymer OKS-8041, manufactured by The Nippon Synthetic Chemical Industry Co., Ltd.), sodium carboxymethyl cellulose (CELLOGEN 5A and CELLOGEN 6A, manufactured by DKS Co. Ltd.), starch (Histard PSS-5, manufactured by Sanwa Starch Co., Ltd.), and gelatin (beMatrix®, manufactured by Nitta Gelatin Inc.).

The coverage film of the large core particle and the small core particle with the resin mentioned above preferably has an average thickness of from 5 to 1,000 nm, more preferably from 5 to 500 nm, furthermore preferably from 50 to 300 nm, and particularly preferably from 100 to 200 nm.

In the present disclosure, curing is conducted by a cross-linking agent, which makes it possible to reduce the thickness of a coverage film and also strike a balance between strength and accuracy of a thin coverage film.

When the coverage film of the core particle has an average coverage thickness of 5 nm or greater, strength of a cured object (solid freeform fabrication object) formed of the powder material (layer) for solid freeform fabrication formed by applying the liquid material for solid freeform fabrication to the powder material for solid freeform fabrication is enhanced so that the cured object is free of problems such as losing shape during treatment such as sintering conducted after curing or handling. Conversely, when the average thickness is 1,000 nm or less, the dimension accuracy of the cured object (solid freeform fabrication object) formed of the powder material (layer) for solid freeform fabrication formed by applying the liquid material for curing to the powder material for solid freeform fabrication is improved.

The coverage thickness can be obtained by, for example, measuring the surface of the core particle exposed by etching the powder material for solid freeform fabrication embedded in an acrylic resin, etc., using a scanning tunneling microscope (STM), an atomic force microscope (AFM), or a scanning electron microscope (SEM).

The coverage factor (area ratio) of the surface of the large core particle and the small core particle covered with the resin is 15 percent or more, preferably 50 percent or more, and more preferably 80 percent or more.

When the coverage factor is 15 percent or more, the strength of a cured object (solid freeform fabrication object) formed of the powder material (layer) for solid freeform fabrication formed by applying the liquid material for solid freeform fabrication to the powder material is sufficient and the cured object is free of problems such as losing shape during treatment such as sintering and handling conducted after curing or handling. In addition, dimension accuracy of the cured object for solid freeform fabrication object formed of the powder material for solid freeform fabrication formed by applying the liquid material to the powder material is improved.

The coverage factor is obtained by, for example, observing a photograph of the powder material for solid freeform fabrication and calculating the average of the area ratio (percent) of the portion covered with the resin to all the area of the surface of the powder material particle about the powder material for solid freeform fabrication in the two-dimensional photograph. The average is determined as the coverage factor. In addition, the coverage factor can be obtained by measuring the portion covered with the resin by element mapping according to energy dispersive X-ray spectrometry such as SEM-EDS.

The amount of attachment of the resin to the powder material for solid freeform fabrication is preferably 0.5 percent by mass or more and more preferably 0.7 percent by mass or more in order to secure the strength bearable against handling of a manufactured solid freeform fabrication object.

The amount of attachment of the resin is obtained, for example, based on mass reduction ratio by heating the powder material for solid freeform fabrication to 400 degrees C using a thermogravimetric analyzer (TGA-50, manufactured by Shimadzu Corporation).

### Other Components

The powder material for solid freeform fabrication of the present disclosure may furthermore optionally contain other components.

The other optional components are not particularly limited and can be selected to a suitable application. Examples are a filler, a leveling agent, and a sintering helping agent.

### Filler

Mainly, the filler is attached to the surface of the powder material for solid freeform fabrication. Alternatively, the gaps between the powder material are filled in with the filler. For example, such fillers improves flowability (fluidity) of the powder material for solid freeform fabrication and/or increases contact points between the powder material, thereby reducing gaps. This may help improving the strength and the dimension accuracy of a solid freeform fabrication object.

### Leveling Agent

The leveling agent is suitable to control wetting property of the surface of the powder material for solid freeform fabrication. For example, the leveling agent helps improving permeation property of liquid material for solid freeform fabrication to powder material layer for solid freeform fabrication, enhancing strength of a solid freeform fabrication object, speeding up the enhancement of the strength so that the form of the solid freeform fabrication object can be stably maintained.

### Sintering Helping Agent

The sintering helping agent is suitable to increase the efficiency of sintering when sintering an obtained solid freeform fabrication object. For example, the sintering helping agent improves strength of a solid freeform fabrication object, lowers the sintering temperature, and shrotens the sintering time.

### Method of Manufacturing Powder Material for Solid Freeform Fabrication

The method of manufacturing the powder material for solid freeform fabrication has no particular limit and can be suitably selected to suit to a particular application. For example, a method of covering the large core particle and the small core particle with the resin mentioned above according to a known covering method is suitable.

### Covering Method

The method of covering the surface of the large core particle and the small core particle with the resin is not particularly limited. For example, a known coverage method is used to coat the surface with the resin. Specific examples include, but are not limited to, a tumbling fluidizing method, a spraying method, a dipping method, a stirring and mixing method, a spray drying method, and a kneader coating method. Of these, the tumbling fluidizing method is preferable in terms of the covering factor of the resin and uniformity of the covering thickness.

In the tumbling fluidizing method, heated wind is sent from below to whirl powder material in the air to form a flowable layer and liquid containing a resin is sprayed to the layer to coat the particle with the liquid. The particle is coated by using a tumbling fluidizing coating device available on the market. However, if the resin is easily thermally attached or greatly dissolved in solvents, the flowable layer becomes unstable, inviting excessive agglomeration, due to which coating cannot continue at worst.

### Disintegration Treatment

The powder material for solid freeform fabrication covered with the resin by the covering method may adhere to each other during coating, causing the powder material to agglomerate. The agglomeration degrades smoothness of the surface of the recoated layer during recoating and inhibits close-packing, inviting sparse and dense attachment between the recoated layers. As a consequence, strength between the layers is weakened so that peeling between layers tends to occur. Accordingly, it is preferable to conduct disintegration to reduce agglomeration as much as possible.

As such a disintegration treatment, for example, a collision disintegration method (using a jet mill, etc.) using high pressure air, a bead disintegration method (using a bead mill, etc.) using SUS balls or ceramic balls, a disintegration method (using a pin mill) using a wing or pin rotating at high speed, etc. are suitable. Of these, the collision disintegration method using high pressure air is preferable because, during disintegration, the form of the powder material is maintained and the resin covering the powder material is not easily detached. However, if strength of the substrate (core particle) is poor against an impact, care should be taken to determine the disintegration conditions to avoid disintegration of the core particle itself.

### Properties of Powder Material for Solid Freeform Fabrication

### Form and Circularity

The form and circularity of the powder material for solid freeform fabrication have no particular limit and can be suitably selected to suit to a particular application. Preferably, the form has a spherical form having a circularity closer to 1.0. In that case, the powder material for solid freeform fabrication is close packed and the gap in the obtained solid freeform fabrication object and the sintered compact can be reduced, which may contribute to enhancement of strength. Circularity can be measured by using a known circularity measuring device such as a flow-type particle image analyzer (FPIA-3000, manufactured by Malvern Instruments Ltd.).

### Flowability

Flowability (fluidity) of the powder material for solid freeform fabrication is not particularly limited and can be suitably selected to suit to a particular application. Flowability of the powder material for solid freeform fabrication can be measured by a known method. For example, methods using a repose angle, degree of compression, flowing speed, a shearing cell test, etc. are suitable. The repose angle is generally used and represented by the angle created by the horizontal plane and the slope of a pile (mountain) of powder stably held without a voluntary collapse when the powder is dropped from a certain height. The repose angle can be measured by, for example, a powder property measuring device such as powder tester PT-N type, manufactured by Hosokawa Micron Corporation).

The repose angle of the powder material for solid freeform fabrication of the present disclosure is preferably 55 degrees or less, more preferably 40 degrees or less, and furthermore preferably 35 degrees or less.

The powder material for solid freeform fabrication of the present disclosure can be suitably applied to simple and efficient manufacturing of various solid freeform fabrication objects and also particularly suitably applied to the material set for solid freeform fabrication of the present disclosure, the method of manufacturing a solid freeform fabrication object of the present disclosure, and the device for manufacturing a solid freeform fabrication object of the present disclosure, which are described later.

### Material Set for Solid Freeform Fabrication

The material set for solid freeform fabrication of the present disclosure contains the powder material for solid freeform fabrication of the present disclosure, liquid material for solid freeform fabrication containing at least one of water and a water-soluble solvent, and other optional components.

For example, in the present disclosure, a layer of the powder material for solid freeform fabrication is formed and the liquid material for solid freeform fabrication is applied to the layer to dissolve or swell the covering resin formed on the surface of the powder material for solid freeform fabrication by the liquid component contained in the liquid material for solid freeform fabrication. As a result, the powder material for solid freeform fabrication is attached to adjacent powder material for solid freeform fabrication. This operation is repeated followed by drying to obtain a solid freeform fabrication object. The powder material for solid freeform fabrication and the liquid material for solid freeform fabrication used in this case are referred to as the material set for solid freeform fabrication in the present disclosure.

In addition, for example, the material set for solid freeform fabrication of the present disclosure can be obtained by simply mixing the powder material for solid freeform fabrication and the liquid material for solid freeform fabrication with a desired ratio and pouring the thus-obtained slurry into a mold or shaping in three dimensional manner. The material set for solid freeform fabrication also includes such slurry. That is, the material set for solid freeform fabrication of the present disclosure includes all the combinations of the powder material for solid freeform fabrication and the liquid material for solid freeform fabrication irrespective of the method of manufacturing a solid freeform fabrication object.

### Liquid Material for Solid Form Fabrication

The liquid material for solid freeform fabrication contains a liquid component to dissolve the resin contained in the powder material for solid freeform fabrication and preferably a cross-linking agent and other optional components.

The liquid material for solid freeform fabrication is used to cure the powder material for solid freeform fabrication. "To cure" means the state in which the core particles adhere to each other or agglomerate via the covering resin. The powder material for solid freeform fabrication can constantly hold a solid form due to this curing.

When the liquid material for solid freeform fabrication is applied to the resin contained in the powder material for solid freeform fabrication, the resin is dissolved in the liquid component contained in the liquid material for solid freeform fabrication. Preferably, the resin cross-links by the action of the cross-linking agent contained in the liquid material for solid freeform fabrication.

### Liquid Component

The liquid material for solid freeform fabrication takes a liquid form at room temperature, meaning that the liquid material contains a liquid component.

The liquid component has no particular limit as long as the liquid component dissolves the resin contained in the powder material for solid freeform fabrication. Preferably, water and water-soluble solvents are suitably used. In particular, water is used as the main component. The solubility of the resin increases, which makes it possible to manufacture a solid freeform fabrication object having a high level of strength. The ratio of water in the total content of the liquid material for solid freeform fabrication is preferably from 40 to 85 percent by mass and more preferably from 50 to 80 percent by mass.

When the ratio of water is from 40 to 85 percent by mass, the solubility of the resin of the powder material for solid freeform fabrication is good and the strength of the thus-obtained solid freeform fabrication object can be maintained. Also, the inkjet nozzle is kept not dried, thereby preventing occurrence of clogging or non-discharging.

The water-soluble solvent is suitable to enhance water retention and discharging stability in particular when the liquid material for solid freeform fabrication is discharged by using inkjet nozzles. If these are degraded, the nozzle becomes dry, resulting in unstable discharging or clogging. This leads to deterioration of the strength and dimension accuracy of a solid freeform fabrication object. Mostly, these water-soluble solvents have higher viscosity and boiling points than water and serve as humectants, drying inhibitors, and viscosity adjusters for the powder material for solid freeform fabrication.

### Water-Soluble Solvent

The water-soluble solvent has no particular limit as long as the solvent is a water-soluble liquid material.

Specific examples include, but are not limited to, ethanol, 1,2,6-hexane triol, 1,2-butane diol, 1,2-hexanediol, 1,2-pentanediol, 1,3-diemthyl-2-imidazolidinone, 1,3-butane diol, 1,3-propane diol, 1,4-butane diol, 1,5-pentanediol, 1,6-hexanediol, 2,2-dimethyl-1,3-propane diol, 2,3-butane diol, 2,4-pentanediol, 2,5-hexanediol, 2-ethyl-1,3-hexanediol, 2-pyrolidone, 2-methyl-1,3-propane diol, 2-methyl-2,4-pentanediol, 3-methyl-1,3-butane diol, 3-methyl-1,3-hexanediol, N-methyl-2-pyrolidone, N-methyl pyrrolidinone, β-buthoxy-N,N-dimethylpropione amide, β-methoxy-N,N-dimethyl propione amide, γ-butylolactone, ε-caprolactam, ethylene glycol, ethylene glycol-n-butyl ether, ethylene glycol-n-propylether, ethylene glycol phenyl ether, ethylene glycol mono-2-ethylhexyl ether, ethylene glycol monoethyl ether, glycerin, diethylene glycol, diethylene glycol-n-hexylether, diethylene glycolmethylether, diethylene glycol monoethyl ether, dietheylene glycol monobutyl ether, diethylene glycol monomethyl ether, diglycerin, dipropylene glycol, dipropylene glycol, dipropylene glycol-n-propylether, dipropylene glycol monomethylether, dimethylsulfoxide, sulfolane, thiodiglycol, tetraethylene glycol, triethylene glycol, triethylene glycol ethylether, triethylene glycol dimethylether, triethylene glycol monobutylether, triethylene glycol methylether, tripropylene glycol, tripropylene glycol-n-propylether, tripropylene glycol methylether, trimethylol ethane, tirmethylol propane, propylpropylene diglycol, propylene glycol, propylene glycol-n-butylether, propylene glycol-t-butylether, propyleneglycol phenylether, propylene glycol monoethylether, hexylene glycol, polyethylene glycol, polypropylene glycol, aliphatic hydrocarbons, ketone-based solvents such as methylethylketone, ester-based solvents such as ethylacetate, and ether-based solvents such as glycol ether. These can be used alone or in combination.

The content of the water-soluble solvent is preferably from 5 to 60 percent by mass, more preferably from 10 to 50 percent by mass, and further more preferably from 15 to 40 percent by mass to the total content of the liquid material for solid freeform fabrication in light of discharging stability, solubility of resin, drying property of a solid freeform fabrication object, etc.

### Cross-linking Agent

The cross-linking agent is suitable to further enhance the strength of a thus-obtained solid freeform fabrication object due to cross-linking with the resin covering the surface of the large core particle and the small core particle of the powder material for solid freeform fabrication.

Such cross-linking agents are not particularly limited as long as the agent conducts cross-linking reaction of the resin and can be suitably selected to suit to a particular application. Examples are metal salts, metal complexes, organic zirconium compounds, organic titanium compounds, and chelating agents. Metal compounds including a metal element are preferable.

Specific examples of the organic zirconium compound include, but are not limited to, zirconium oxychloride, ammonium zirconium carbonate, and ammonium zirconium lactate.

Specific examples of the organic titanium compounds include, but are not limited to, titanium acylate and titanium alkoxide.

These can be used alone or in combination.

Furthermore, as the metal compound, compounds that ionize cation metal having di-or higher valent in water are preferable.

Specific examples of the metal compounds include, but are not limited to, zirconium oxychloride octahydrate (quadrivalent), aluminum hydroxide (trivalent), magnesium hydroxide (divalent), titanium lactate ammonium salt (quadrivalent), aluminum subacetate (trivalent), ammonium salt of zirconium carbonate (quadrivalent), titanium triethanol aminate (quadrivalent), glyoxyl acid salts, and zirconium lactate ammonium salts. Of these, to obtain excellent strength of a thus-obtained solid freeform fabrication object, zirconium compounds are preferable and ammonium zirconium carbonate is particularly preferable.

In addition, these are available on the market.

Specific examples include, but are not limited to, zirconium oxychloride octahydrate (zirconium oxychloride, manufactured by DAIICHI KIGENSO KAGAKU KOGYO Co., LTD.), aluminum hydroxide (manufactured by Wako Pure Chemical Industries, Ltd.), magnesium hydroxide (manufactured by Wako Pure Chemical Industries, Ltd.), titanium lactate ammonium salts (Orgatix TC-300, manufactured by Matsumoto Fine Chemical Co. Ltd.), zirconium lactate ammonium salts (Orgatix ZC 300, manufactured by Matsumoto Fine Chemical Co. Ltd.), basic aluminum acetate (manufactured by Wako Pure Chemical Industries, Ltd.), bisvinyl sulfone compound (VS-B (K-FJ-C)), manufactured by FUJIFINE Chemical CORPORATION), carboxylic acid zirconium ammonium salt (Zircosol AC-20, manufactured by DAIICHI KIGENSO KAGAKU KOGYO CO., LTD.), titanium triethanol aminate (Orgatix TC-400, manufactured by Matsumoto Fine Chemical Co. Ltd.), glyoxyl acid salt (Sagelink SPM-01, manufactured by The Nippon Synthetic Chemical Industry Co., Ltd.), and adipic acid dihydrazide (manufactured by Otsuka Chemical Co., Ltd.).

"Cross-linking agent" in the present disclosure is a compound having a portion cross-linkable with a functional group of a target (resin) of cross-linking and constitutes the bond portion of the cross-linking bond between the targets of cross-linking. Therefore, "cross-linking agent" is clearly distinguished from so-called "initiator" such as peroxides (organic peroxides) and reducing agents, which is self-decomposed upon application of heat or light to produce free radicals, which are added to unsaturated monomers to open double-bonds, and conducts next radical reaction at the same time. Due to the initiator, this process is repeated to accelerate polymerization and a hydrogen bonded to a carbon in a saturated compound is extracted to produce other radicals for re-bond to form cross-linking between the saturated compounds. That is, the initiator itself is not one of the constituents of the cross-linked portion but just initiates and accelerate radical reaction.

In addition, the content of the cross-linking agent in the liquid material for solid freeform fabrication is not particularly limited and can be suitably selected to suit to a particular application. Preferably, the content is from 0.1 to 50 percent by mass and more preferably from 0.5 to 30 percent by mass to the resin in the powder material for solid freeform fabrication.

When the content is from 0.1 to 50 percent by mass, the liquid material is not thickened or gelated and strength of thus-obtained solid freeform fabrication object is enhanced.

### Other Components

The other components of the liquid material for solid freeform fabrication are, for example, known materials such as surfactants, humectants, drying inhibitors, viscosity adjusters, permeating agent, defoaming agents, pH regulators, preservatives, fungicides, colorants, preserving agents, and stabilizing agents. These can be added with no particular limit. Of these, surfactants are preferable.

The surfactant is mainly used to control wetting property, permeability, and surface tension of the liquid material for solid freeform fabrication to the powder material for solid freeform fabrication.

The content of the surfactant to the liquid material for solid freeform fabrication is preferably from 0.01 to 10 percent by mass, more preferably from 0.1 to 5 percent by mass, and furthermore preferably from 0.5 to 3 percent by mass.

When the total content of the surfactant is below this range, permeability of the liquid material for solid freeform fabrication to the powder material for solid freeform fabrication deteriorates and strength of a solid freeform fabrication object may deteriorate. To the contrary, when the total content of the surfactant is above this range, permeability of the liquid material for solid freeform fabrication to the powder material for solid freeform fabrication is not appropriately controlled so that the liquid material easily oozes outside a desired area, thereby degrading the dimension accuracy of a thus-obtained solid freeform fabrication object.

The method of preparing the liquid material for solid freeform fabrication is not particularly limited and can be suitably selected to a particular application. For example, a method of adding the other optional components to water or the water-soluble solvent followed by mixing and stirring is suitable.

### Method of Manufacturing Solid Freeform Fabrication Object and Device for Manufacturing Solid Freeform Fabrication Object

The method of manufacturing a solid freeform fabrication object of the present disclosure includes forming a powder material layer, applying liquid material for solid freeform fabrication to the powder material layer, and other optional steps.

The steps of forming the powder material layer and applying the liquid material for solid freeform fabrication thereto are repeated to manufacture a solid freeform fabrication object.

The device for manufacturing a solid freeform fabrication object of the present disclosure includes a powder material layer forming device and a liquid material applying device. The device for manufacturing a solid freeform fabrication object preferably includes a powder material accommodating unit and a liquid material accommodating unit with other optional devices.

Powder Material Layer Forming Process and Powder Material Layer Forming Device

In the powder material layer forming process, a layer of the powder material for solid freeform fabrication is formed using the powder material for solid freeform fabrication in the material set for solid freeform fabrication of the present disclosure.

The powder material layer forming device forms a layer of the powder material for solid freeform fabrication using the powder material for solid freeform fabrication in the material set for solid freeform fabrication of the present disclosure.

It is preferable to form the powder material layer on a substrate.

### Substrate

The substrate is not particularly limited as long as it can place the powder material for solid freeform fabrication thereon and can be suitably selected to suit to a particular application. For example, a known platform having a surface on which the powder material for solid freeform fabrication is placed or base plate of the device illustrated in FIG. 1 of unexamined Japanese Patent Application Publication No. 2000-328106 is suitably used.

The surface of the substrate, that is, the surface on which the powder material for solid freeform fabrication powder is placed may be, for example, smooth, coarse, plane, or curved plane. It is preferable that the surface have a low affinity with the organic material when the organic material in the powder material for solid freeform fabrication is dissolved and cross-linked by the action of the cross-linking agent.

If the affinity of the surface with the dissolved and cross-linked organic material is lower than that of the substrate with the dissolved and cross-linked organic material, it is easy to take the obtained solid freeform fabrication object out of the surface.

### Forming of Powder Material Layer

The method of placing the powder material for solid freeform fabrication on the substrate is not particularly limited and can be suitably selected to suit to a particular application. For example, a method using a known counter rotation mechanism (counter roller) for use in a selective laser sintering method disclosed in Japanese Patent No. 3607300, a method of extending the powder material for solid freeform fabrication into a thin layer using a member such as a brush, a roller, and a blade, a method of pressing the surface of the powder material for solid freeform fabrication using a pressure member to extend the powder material for solid freeform fabrication into a thin layer, and a method of using a known powder material additive manufacturing device are suitable as the method of placing the powder material for solid freeform fabrication in a thin layer.

Using the counter rotation mechanism (counter roller), the brush, the blade, or the pressing member, a thin layer of the powder material for solid freeform fabrication can be placed on the substrate, for example, in the following manner:
In an outer frame (also referred to as "mold", "hollow cylinder" "tubular structure", etc.), the powder material for solid freeform fabrication is placed by the counter rotation mechanism (counter roller), the brush, the roller or the blade, the pressing member, etc. onto the substrate arranged to move up and down slidably along the inside wall of the outer frame. At this point, when a substrate movable up and down in the outer frame is used, the substrate is disposed slightly lower than the upper aperture of the outer frame. That is, while disposing the substrate by a layer thickness of the powder material below the upper aperture, the powder material is placed on the substrate. As a result, a thin layer of the powder material for solid freeform fabrication is placed on the substrate.

By causing the liquid material for solid freeform fabrication to react with the thin layer of the powder material for solid freeform fabrication placed on the substrate, the thin layer is cured (the step of applying the liquid material described above).

Similarly, the powder material for solid freeform fabrication is placed in a thin film manner on the thus-obtained cured material of the thin layer and thereafter the liquid material for solid freeform fabrication is applied to the thin layer of the powder material (layer) for solid freeform fabrication to cause curing. The curing at this point of time occurs to not only the powder material layer formed on the thin layer but also the border between the powder layer and the thin layer (cured object) that is already cured and present below the powder layer. As a consequence, the cured object (solid freeform fabrication object) is obtained which has a thickness corresponding to about the two layers of the powder material (layer) for solid freeform fabrication placed on the thin layer.

In addition, it is possible to automatically and simply place a thin layer of the powder material on the substrate mentioned above if the known powder additive manufacturing device described above is used. The powder additive manufacturing device described above generally has a recoater to laminate the powder material for solid freeform fabrication, a movable supply tank to supply the powder material onto the substrate mentioned above, and a movable fabrication tank to place the powder material in a thin layer manner to laminate the thin layers. In the powder additive manufacturing device, the surface of the supply tank can be elevated slightly above the surface of the fabrication tank by moving up the supply tank, moving down the fabrication tank, or both. In addition, the powder for solid freeform fabrication is disposed to form a thin layer using the recoater from the side of the supply tank. By repeating moving the recoater, the thin layers of the powder material for solid freeform fabrication are laminated.

The thickness of the layer of the powder material for solid freeform fabrication is not particularly limited and can be selected to suit to a particular application. For example, the average thickness for a single layer is preferably from 30 to 500 µm and more preferably from 60 to 300 µm.

When the thickness is 30 µm or greater, strength of the cured object (solid freeform fabrication object) of the powder material (layer) for solid freeform fabrication formed by applying the liquid material for solid freeform fabrication to the powder material for solid freeform fabrication becomes sufficient and the thus-obtained solid freeform fabrication object is free of problems such as losing shape during processing such as sintering conducted after the layer forming or handling. When the thickness is 500 µm or less, the dimension accuracy of the cured object (solid freeform fabrication object) of the powder material (layer) for solid freeform fabrication formed by applying the liquid material for solid freeform fabrication to the powder material for solid freeform fabrication is improved.

Incidentally, the average thickness has no particular limit and can be measured according to a known method.

### Liquid Material Applying Process and Liquid Material Applying Device

The process of applying the liquid material is to apply the liquid material for solid freeform fabrication in the material set for solid freeform fabrication of the present disclosure to the layer of the powder material formed in the powder material layer forming process.

A particular area of the layer of the powder material to which the liquid material for solid freeform fabrication is applied is cured.

The liquid material applying device is to apply the liquid material for solid freeform fabrication in the material set for solid freeform fabrication of the present disclosure to the layer of the powder material formed by the powder material layer forming device.

The method of applying the liquid material to the powder material layer is not particularly limited and can be suitably selected to suit to a particular application. For example, a dispenser method, a spray method, or an inkjet method is suitable. To execute such a method, a known device is suitably used as the liquid material applying device.

Of these, the dispenser method has an excellent quantitative property but the application area is small. The spray method is capable of simply forming a fine discharging material, has a wide application area, and demonstrates excellent applicability but the quantitative property thereof is poor so that powder material for solid freeform fabrication scatters due to the spray stream. For this reason, in the present disclosure, the inkjet method is particularly preferable. The inkjet method has a good quantitative property in comparison with the spray method and a wider application area in comparison with the dispenser method. Accordingly, the inkjet method is preferable to accurately and efficiently form a complex solid shape.

When utilizing the inkjet method, the liquid material applying device has a nozzle through which the liquid material for solid freeform fabrication can be applied to the powder material layer according to the inkjet method. As the nozzle, nozzles (discharging head) in the known inkjet printers can be suitably used. In addition, it is possible to use the inkjet printer as the liquid material applying device for solid freeform fabrication. A preferred specific example of the inkjet printer is SG7100, manufactured by Ricoh Company Ltd. It is preferable to use the inkjet printer because the printer can drip a large amount of the modeling liquid from the head portion at once and the application area is large, which leads to improvement of performance of the application.

In the present disclosure, even when an inkjet printer is used which accurately and efficiently applies the liquid material for solid freeform fabrication, the nozzles and the head of the nozzles are free of problems such as clogging and corrosion since the liquid material contains no solid material such as particles or highly viscous polymer such as a resin. In addition, when the liquid material is applied (discharged) onto the powder material layer for solid freeform fabrication, it efficiently permeates into the resin particles in the powder material for solid freeform fabrication. Accordingly, the efficiency of manufacturing a solid freeform fabrication object is excellent and an unexpected volume increase can be avoided since polymer components such as resins are not applied. Consequently, a solid freeform fabrication object having a good dimension accuracy can be easily and efficiently obtained in a short time.

The cross-linking agent can also serve as a pH regulator in the liquid material for solid freeform fabrication. When the liquid material for solid freeform fabrication is applied to the powder material layer for solid freeform fabrication according to the inkjet method, pH of the liquid material is preferably from 5 (weak acidity) to 12 (basic) and more preferably from 8 to 10 (weak basic) in terms of prevention of clogging and corrosion of nozzle head portions of nozzles to be used. To regulate pH, known pH regulators may be used.

### Powder Material Accommodating Unit

The powder material accommodating unit (container) contains the powder material for solid freeform fabrication. The size, forms, materials, etc. thereof are not particularly limited and can be suitably selected to suit to a particular application. For example, a storage tank, a bag, a cartridge, or a tank is usable.

### Liquid Material Accommodating Unit for Solid Freeform Fabrication

The liquid material accommodating unit (container) contains the liquid material for solid freeform fabrication. The size, forms, materials, etc. thereof are not particularly limited and can be suitably selected to suit to a particular application. For example, a storage tank, a bag, a cartridge, or a tank is suitably used.

### Other Step and Other Device

The other processes include a drying process, a sintering process, a surface protection treatment process, a coating (application) process, etc.

The other devices include a dryer, a sintering device, a surface protection treatment device, a coating device (applicator), etc.

The drying step is to dry a cured object (solid freeform fabrication object) obtained in the liquid material application step. In the drying process, not only water contained in the cured object but also organic material may be removed (degreasing). For example, known driers can be the drying device.

The sintering step is to sinter a cured material (solid freeform fabrication object) formed in the step of liquid material application.

According to this sintering step, the cured object is made as an integrated object (sintered compact of the solid freeform fabrication) of metal or ceramics. For example, a known sintering furnace can be used as the sintering device.

The surface protection treatment step is to form a protection layer on a cured object (solid freeform fabrication object) formed in the step of liquid material application. Due to the surface protection step, the surface of the cured material (solid freeform fabrication object) has durability to a degree that, for example, the object can be used as is.

Specific examples of the protection layer include, but are not limited to, a water-resistant layer, a weather resistant layer, a light resistant layer, a heat insulation layer, and a gloss layer.

Specific examples of the surface protection treatment device include, but are not limited to, known surface protection treatment devices such as a spraying device and a coating device. The coating step is to conduct coating a cured object (solid freeform fabrication object) formed in the liquid material application step. Due to the coating process, the cured object (solid freeform fabrication) is colored in a desired color.

Specific examples of the coating device include, but are not limited to, known coating devices using a spray, a roller, a brush, etc.

FIGS. 1A to IF are schematic diagrams illustrating an example of the process of manufacturing a solid freeform fabrication object using the material set for solid freeform fabrication of the present disclosure.

The device for manufacturing a solid freeform fabrication object illustrated in FIGS. 1A to IF includes a powder storage tank 1 for solid freeform fabrication and a powder storage tank 2 for supplying. Each of these powder storage tanks 1 and 2 has a stage 3 movable up and down and places the powder material for solid freeform fabrication of the present disclosure on the stage 3 to form a layer formed of the powder material for solid freeform fabrication. A liquid material supply device 5 for solid freeform fabrication is disposed over the powder storage tank 1 for solid freeform fabrication to discharge a liquid material 6 for solid freeform fabrication toward the powder material for solid freeform fabrication in the powder storage tank 1. Furthermore, the device for manufacturing a solid freeform fabrication object has a powder material layer forming device 4 (hereinafter also referred to as recoater) for solid freeform fabrication capable of supplying the powder material for solid freeform fabrication from the powder storage tank 2 for solid freeform fabrication to the powder storage tank 1 for solid freeform fabrication and smoothing the surface of the powder material (layer) for solid freeform fabrication in the powder storage tank 1 for solid freeform fabrication.

FIGS. 1A and 1B are diagrams illustrating the step of supplying the powder material for solid freeform fabrication from the powder storage tank 2 for supplying to the powder storage tank 1 for solid freeform fabrication and the step of forming the powder material layer for solid freeform fabrication having a smooth surface. Each stage 3 of the powder storage tank 1 for solid freeform fabrication and the powder storage tank 2 for supplying is controlled to adjust the gap therebetween to obtain a desired thickness. Thereafter, the powder material layer forming device 4 for solid freeform fabrication is moved from the powder storage tank 2 for supplying to the powder storage tank 1 for solid freeform fabrication. As a result, the powder material layer for solid freeform fabrication is formed in the powder storage tank 1 for solid freeform fabrication

FIG. 1C is a schematic diagram illustrating an example of a process of dripping the liquid material 6 for solid freeform fabrication onto the powder material layer for solid freeform fabrication in the powder storage tank 1 for solid freeform fabrication by the liquid material supply device 5 for solid freeform fabrication. At this point, the position where the liquid material 6 for solid freeform fabrication is dripped on the powder material layer for solid freeform fabrication is determined based on two-dimensional image data (slice data) obtained by slicing the solid freeform fabrication object into multiple plane layers.

The stage 3 of the powder storage tank 2 for supplying is elevated, the stage 3 of the powder storage tank 1 for solid freeform fabrication is lowered, the gap therebetween is controlled to obtain a desired thickness. Thereafter, the powder material layer forming device 4 for solid freeform fabrication is moved again from the powder storage tank 2 for supplying to the powder storage tank 1 for solid freeform fabrication. As a result, a new powder material layer for solid freeform fabrication is formed in the powder storage tank 1 for solid freeform fabrication (FIGS. 1D and 1E).

FIG. 1F is a schematic diagram illustrating an example of the process of dripping the liquid material 6 for solid freeform fabrication onto the powder material layer for solid freeform fabrication in the powder storage tank 1 for solid freeform fabrication by using the liquid material supply device 5 for solid freeform fabrication.

By repeating this series of steps followed by optional drying and removing the powder material for solid freeform fabrication not attached to the liquid material for solid freeform fabrication, a solid freeform fabrication object is obtained.

FIGS. 2A to 2F are schematic diagrams illustrating another example of the process of manufacturing a solid freeform fabrication object using the material set for solid freeform fabrication of the present disclosure.

The device for manufacturing a solid freeform fabrication object illustrated in FIGS. 2A to 2F operates on the same principle as that illustrated in FIGS. 1A to IF. However, each has a different supplying mechanism.

FIGS. 2A and 2B are diagrams illustrating the step of supplying the powder material for solid freeform fabrication from the powder storage tank 2 for supplying to the powder storage tank 1 for solid freeform fabrication and the step of forming the powder material layer for solid freeform fabrication having a smooth surface. After the powder material for solid freeform fabrication is supplied to the powder storage tank 1 for solid freeform fabrication, the gap is controlled to obtain a desired layer thickness and the powder material layer forming device 4 for solid freeform fabrication is moved to form a powder material layer for solid freeform fabrication on the powder storage tank 1 for solid freeform fabrication.

FIG. 2C is a schematic diagram illustrating the process of dripping the liquid material 6 for solid freeform fabrication to the powder material layer for solid freeform fabrication in the powder storage tank 1 for solid freeform fabrication by using the liquid material supply device 5 for solid freeform fabrication. At this point, the position where the liquid material 6 for solid freeform fabrication is dripped on the powder material layer for solid freeform fabrication is determined based on two-dimensional image data (slice data) obtained by slicing the solid freeform fabrication object into multiple plane layers.

In FIGS. 2D and 2E, the stage 3 of the powder storage tank 1 for solid freeform fabrication is lowered to supply the powder material for solid freeform fabrication from the powder storage tank 2 for supplying to the powder storage tank 1 for solid freeform fabrication, the gap is controlled to obtain a desired thickness, and the powder material layer forming device 4 for solid freeform fabrication is moved again. As a result, a new powder material layer for solid freeform fabrication is formed in the powder storage tank 1 for solid freeform fabrication

FIG. 2F is a schematic diagram illustrating an example of the process of dripping the liquid material 6 for solid freeform fabrication to the powder material layer for solid freeform fabrication again in the powder storage tank 1 for solid freeform fabrication by the liquid material supply device 5 for solid freeform fabrication.

This series of steps is repeated. Subsequent to optional drying, the powder material for solid freeform fabrication not attached to the liquid material for solid freeform fabrication is removed to obtain a solid freeform fabrication object.

The device for manufacturing a solid freeform fabrication object illustrated in FIGS. 2A to 2F is advantageous in terms of compacting the size. However, these are just examples of the processes of manufacturing a solid freeform fabrication object and the present disclosure is not limited thereto.

Specifically, the device of manufacturing a solid freeform fabrication object of the present disclosure includes a powder storage tank for supplying (also referred to as supply tank), a powder storage tank for solid freeform fabrication (also referred to as modeling (fabrication) tank), a powder material layer forming device for solid freeform fabrication including a roller and a powder removing plate, a liquid material supply device for solid freeform fabrication including a head and a head cleaning mechanism, and optional members such as a powder material accommodating unit (container).

The powder storage tank has a tank-like form or a box-like form and the stage constituting the base of the tank can be elevated up and down along a perpendicular direction. In addition, the supply tank and the solid freeform fabrication tank are disposed adjacent to each other. A solid freeform fabrication object is formed on the stage of the fabrication tank. The stage of the supply tank is lifted and the powder material layer in the supply tank is supplied to the stage of the supply tank using the powder material layer forming device for solid freeform fabrication including a smoothing roller. The powder material layer forming device for solid freeform fabrication smooths the upper surface of the powder material placed on the stage of the supply tank and the fabrication tank to form a powder material layer.

The liquid material supply device for solid freeform fabrication using a head is used to discharge the liquid material for solid freeform fabrication to the powder material layer for solid freeform fabrication formed on the stage. The head cleaning mechanism suctions the liquid material for solid freeform fabrication and wipes the discharging orifice while attached to a head.

FIG. 3 is a schematic diagram illustrating a powder storage tank 100 of the device of manufacturing a solid freeform fabrication object. The powder storage tank 100 has a box-like form and includes a supply tank 102 and a fabrication tank 101 with the upper faces of the two tanks open.

Inside each of the supply tank 102 and the fabrication tank 101, a stage is held elevatable up and down. Each side of the stages is placed adjacent to the frame of each of the tanks and the upper surface of the stage is held horizontally. Around these powder storage tanks 100, a powder dropping gutter 103 having a concave-like form is disposed with the upper surface thereof open. Extra powder material accumulating by the smoothing roller while forming a powder material layer is dropped to the powder dropping gutter 103. The extra powder dropped to the powder dropping gutter 103 is returned to the powder supplying unit disposed above the fabrication tank 101 by an operator or a suction mechanism, if desired.

The powder material accommodating unit (container) has a tank-like form disposed above the supply tank 102. When the powder material in the supply tank 102 decreases or at the time of initial operation of fabrication, the powder in the tank is supplied to the supply tank 102. As the methods of conveying powder to supply the powder, for example, a screw conveyor method using a screw or an air transfer method using air is suitable.

The smoothing roller supplies the powder material from the supply tank 102 to the fabrication tank 101 to form a powder material layer having a predetermined thickness (for example, thickness of Δt1 - Δt2). As illustrated, the smoothing roller is a stick-like material longer than the inside dimension (that is, width of the portion where the powder material is supplied or placed) of the fabrication tank 101 and the supply tank 102 and both ends of the smoothing roller is supported by a reciprocating device. The smoothing roller horizontally moves rotating and passing over the supply tank 102 and the fabrication tank 101 from the outside of the supply tank 102 so that the powder material can be supplied onto the fabrication tank 101. Specifically, the stage of the supply tank 102 is elevated while the fabrication tank 101 is lowered.

In this case, it is preferable that the lowering distance of the stage be set in such a manner that the gap between the uppermost powder material layer of the fabrication tank 101 and the lower part of (lower tangent portion) of the smoothing roller be equal to Δt1. In this embodiment, Δt1 is preferably from 50 to 300 µm. For example about 150 µm is suitable.

Next, the smoothing roller is rotated and moved to supply the powder deposited above the upper surface level of the supply tank 102 to the fabrication tank 101, thereby forming a powder layer having a desired thickness of Δt1 on the stage of the fabrication tank 101. The smoothing roller is set to move while keeping the distance between the smoothing roller and the upper surface levels of the fabrication tank 101 and the supply tank 102 constant. As a consequence, while the smoothing roller conveys the powder onto the fabrication tank 101, a powder material layer having a uniform thickness can be formed on the fabrication tank 101 or the fabrication tank 101 already formed.

The smoothing roller preferably rotates in the counter direction (reverse rotation) to the direction of the horizontal movement to convey powder material. However, the roller may rotate in the reverse direction (proper rotation) to the counter direction to increase density of the powder material. In addition, once the roller is reversely rotated and horizontally moved, it is possible to elevate the stage of the fabrication tank 101 in an amount corresponding to Δt2 and properly rotate and horizontally move the roller to improve conveyance of the powder and the density thereof. In this embodiment, Δt2 is preferably from 50 to 100 µm. For example about 50 µm is suitable. The difference (Δt1 - Δt2) corresponds to the thickness of the fabricated layer in the fabrication tank 101, that is, the pitch of lamination.

In addition, the smoothing roller preferably includes a powder removing plate to remove the powder material attached to the smoothing roller. The powder removing plate is preferably disposed adjacent to the roller at the position in the powder-not-smoothed area and below the rotation center of the roller to prevent powder attached to the roller from scattering to the smoothed area. A blade of a square log is also suitable as the smoothing member in addition to the roller. The smoothing member and the drive condition can be changed depending on the properties (such as degree of condensation of particle and flowability) of the powder material and the storage state (such as storage in a high humidity environment) of the powder material. In addition, the drive condition can be changed depending on the high density condition.

The head includes a cyan head, a magenta head, a yellow head, a black head, and a clear head. Multiple tanks accommodating each of a cyan fabrication liquid material, a magenta fabrication liquid material, a yellow fabrication liquid material, a black fabrication liquid material, or a clear fabrication liquid material are installed inside the device for manufacturing a solid freeform fabrication object. Each color head is connected with a tank accommodating a corresponding color liquid material by a flexible tube. The head is controlled to discharge the liquid material of each color to the powder material layer. The number of heads and the kind of the liquid material to be discharged can be changed.

For example, if coloring a solid freeform fabrication object is not necessary, it is possible to set only a clear head to discharge only the clear fabrication liquid material. The head can be moved along Y axis direction and Z axis direction utilizing a guide rail. When the surfaces of the supply tank and the fabrication tank are smoothed and highly dense by the smoothing roller, the head can be moved to the position where the head does not interfere.

When the liquid material discharged by the head is mixed with the powder material, the resin contained in the powder material is dissolved and the powder material adjacent to each other adheres to each other. As a result, a fabrication layer having a thickness of (Δt1 - Δt2) is formed.

Thereafter, the powder supply step, the smoothing step, the density-increasing step, and the liquid material discharging step by the head described above are repeated to form a new fabrication layer. At this point, the newly formed fabrication layer and the layer just below are integrated to form a part of a solid freeform fabrication object. Thereafter, the solid freeform fabrication object is completed by repeating the powder material supply step and smoothing step, the density-increasing step, and the liquid material discharging step by the head the required number of times.

The head cleaning mechanism mainly includes a cap and a wiper blade. The cap is caused to adhere to the nozzle surface constituting the lower part of the head and suctions the fabrication liquid from the nozzle. This is to evacuate powder material clogged in the nozzle and highly-thickened liquid material. Thereafter, to form a meniscus (negative pressure in the nozzle) of the nozzle, the nozzle surface is wiped. In addition, when the liquid material is not discharged, the head cleaning mechanism covers the nozzle surface to prevent the powder material from entering into the nozzle or the liquid material from being dried.

The thickness of the powder material layer, the drive condition of the smoothing device, and density-increasing drive condition can be changed depending on the material or the particle diameter of the powder material to be used and required accuracy.

### Degreasing and Sintering of Solid Freeform Fabrication Object

Optionally, the obtained solid freeform fabrication object is degreased and sintered.

Degreasing means treatment of removing resins. In the degreasing treatment, unless the resin is fully removed, a sintered compact may be deformed or cracked in the sintering treatment conducted after manufacturing a solid freeform fabrication object. As the degreasing method, a sublimation method, a solvent extraction method, a natural drying method, or a heating method are suitable. Of these, the heating method is preferable.

The heating method includes heat treatment of degreasing an obtained solid freeform fabrication object at degreasable temperatures. The heat treatment is conducted in the atmosphere, or optionally in vacuum or under a reduced pressure, a non-oxidization atmosphere, a pressurized atmosphere, or a gas atmosphere such as nitrogen gas, argon gas, hydrogen gas, and ammonium decomposition gas. The time and temperature of degreasing can be appropriately set depending on core particles or resins. Since the powder material for solid freeform fabrication of the present disclosure uses the polyvinyl alcohol mentioned above as the resin, the degreasing treatment temperature is relatively low. For this reason, the time can be shortened and the manufacturing efficiency of a sintered compact is improved in the present disclosure.

In addition, degreasing according to such heat treatment can be separated into multiple processes. For example, the heat treatment temperature can be changed on the first half and the second half of the heat treatment or alternated between low temperatures and high temperatures during the heat treatment.

The resin is not necessarily completely removed by this degreasing treatment, that is, part of the resin may remain at the time of the completion of the degreasing. Sintering means consolidation of powder at high temperatures. The degreased matter obtained after the degreasing treatment process is sintered in a sintering furnace to obtain a sintered compact. As a result of sintering, the base material (core particle) of the powder material for solid freeform fabrication diffuses and granulates, so that a dense sintered compact having less gaps with a high strength is obtained.

The conditions such as temperatures, time, atmospheres, and the temperature rising speed is determined depending on the composition of core particle and the degreased state, size, and form of a solid freeform fabrication object. However, if the sintering temperature is too low, sintering does not sufficiently proceed, thereby degrading the strength and density of a sintered compact. However, if the sintering temperature is too high, the dimension accuracy of a sintered compact may deteriorate. The sintering atmosphere has no particular limit. For example, in addition to the atmosphere, the sintering can be conducted in vacuum or with a reduced pressure, a non-oxidization atmosphere, or an atmosphere of inert gas such as nitrogen gas, and argon gas.

In addition, sintering can be conducted in two or more steps. For example, it is possible to conduct a primary sintering and a secondary sintering with different sintering conditions, sintering temperatures, sintering time, or sintering atmosphere.

According to the method of manufacturing a solid freeform fabrication object and the device for manufacturing a solid freeform fabrication object of the present disclosure, a solid freeform fabrication object having a complicated form and good dimension accuracy can be simply and efficiently manufactured without losing shape before sintering, etc., by using the powder material for solid freeform fabrication of the present disclosure or the material set for solid freeform fabrication of the present disclosure.

Since each of the thus-obtained solid freeform fabrication object and the sintered compact has a sufficient strength and excellent dimension accuracy, representing fine roughness and curved planes, the object has aesthetic aspect with high quality and can be suitably used for various purposes.

Having generally described preferred embodiments of this disclosure, further understanding can be obtained by reference to certain specific examples which are provided herein for the purpose of illustration only and are not intended to be limiting. In the descriptions in the following examples, the numbers represent weight ratios in parts, unless otherwise specified.

### EXAMPLES

Next, the present disclosure is described in detail with reference to Examples but is not limited thereto.

Next, the present disclosure is described in detail with reference to Examples but is not limited thereto.

### Example 1

### Preparation of Powder Material 1 for Solid Freeform Fabrication

### Manufacturing of Large Particle 1

As the large core particle 1, stainless steel [(SUS316L) powder {PSS-316L (+63 - 210 µm), volume average particle diameter: 150 µm, manufactured by SANYO SPECIAL STEEL Co., Ltd.)] was used.

### Preparation of Coating Liquid 1

114 parts by mass of water was mixed with 6 parts by mass of non-modified partially-saponified polyvinyl alcohol (PVA-205C, degree of average polymerization: 500, degree of saponification: 88.0 mol percent, manufactured by KURARAY CO., LTD.), which was a water soluble resin serving as a binder resin. Thereafter, the mixture was stirred for one hour using a three one motor (BL600, manufactured by SHINTO Scientific Co., Ltd.) while heated at 80 degrees C in a water bath to dissolve the polyvinyl alcohol in the water.

As a result, 120 parts by mass of an 5 percent by mass aqueous solution of polyvinyl alcohol was prepared. The thus-prepared liquid was referred to as [Coating liquid 1].

The viscosity of the 5 percent by mass aqueous solution of polyvinyl alcohol mentioned above at 20 degrees C was from 5.0 to 6.0 mPa• s as measured by a viscometer (DV-E VISCOMETER HADVE 115 TYPE, manufactured by Brookfield Engineering).

### Surface Coating of Large Core Particle 1 with Coating Liquid 1

Thereafter, using a coating device (MP-01, manufactured by POWREX CORPORATION) available on the market, 100 parts by mass of the large core particle 1 was coated with 1 part by mass of [Coating liquid 1].

The coating conditions are as follows:

### Coating Conditions

- Spray setting
   Nozzle type: 970
   Nozzle diameter: 1.2 mm
   Coating liquid discharging pressure: 4.7 Pa• s
   Coating liquid discharging speed: 3 g/min.
   Atomized air amount: 50 NL/min
- Rotor setting
   Rotor type: M-1
   Rotation speed: 60 rpm
   Number of rotation: 400 percent
- Air stream setting
   Air supply temperature: 80 degrees C
   Air supply amount: 0.8 m³/min.
   Bug filter shaking pressure: 0.2 MPa
   Bug filter shaking time: 0.3 seconds
   Bug filter interval: 5 seconds
- Coating time: 40 minutes

### Manufacturing of Small Particle 1

A small core particle 1 was obtained under the same condition as for the preparation of the large particle 1 except that stainless steel [(SUS 316L) powder (PSS-316L (-10 µm}, volume average particle diameter: 8 µm, manufactured by SANYO SPECIAL STEEL Co., Ltd.] was used.

### Method of Mixing Powder Material for Solid Freeform Fabrication

The large particle 1 and the small particle 1 were weighed by a weighing cup to have a volume ratio of 75 percent to 25 percent and loaded in a stirring pot. Using a turbular mixer (manufactured by Shinmaru Enterprises Corporation, the weighed matter was mixed for 30 minutes to obtain [Powder material 1 for solid freeform fabrication].

### Preparation of Liquid Material 1 for Solid Freeform Fabrication

60 parts by mass of water and 40 parts of 1,2-butane diol (manufactured by Tokyo Chemical Industry Co. Ltd.) were mixed and stirred to prepare a liquid material 1 for solid freeform fabrication.

### Manufacturing of Solid Freeform Fabrication Object 1

Using the device for manufacturing a solid freeform fabrication object illustrated in FIG. 3 including a counter roller as the powder material layer forming device for solid freeform fabrication and an inkjet head as the liquid material supply device for supplying, a solid freeform fabrication object 1 was manufactured according to the following manner. As shown in Table 3, a powder material 1 for solid freeform fabrication (large particle 1:small particle 1 = 75 percent by volume:25 percent by volume) was placed in the powder material accommodating unit of the device of manufacturing a solid freeform fabrication object and a liquid material 1 for solid freeform fabrication was placed in the liquid material accommodating unit of the device of manufacturing a solid freeform fabrication. 3D data were input and the processes illustrated in FIGS. 1A to IF were repeated to manufacture a solid freeform fabrication object having a reed-like form.

The average thickness of a single layer of the powder material layer for solid freeform fabrication was adjusted to be about 100 µm to laminate 30 layers in total. After air drying for about two hours, the solid freeform fabrication object was placed in a drier to be dried at 70 degrees C for three hours. Thereafter, the powder material 1 for solid freeform fabrication to which no liquid material 1 for solid freeform fabrication was attached was removed by a brush. The solid freeform fabrication object was placed in the drier again to be dried at 100 degrees C for 12 hours followed by natural cooling down to room temperature to obtain a Solid freeform fabrication object 1.

### Degreasing and Sintering of Solid Freeform Fabrication

The thus-obtained [Solid freeform fabrication object 1] was placed in the drier and heated to 500 degrees C in nitrogen atmosphere in four hours, maintained at 400 degrees C for four hours, and cooled down to 30 degrees C in four hours for degreasing. The thus-obtained degreased matter was subject to sintering treatment at 1,200 degrees C in a sintering furnace in a vacuum condition to manufacture a sintered compact.

### Example 2

A powder material 2 for solid freeform fabrication was manufactured in the same manner as in Example 1 except that the large core particle 1 was replaced with a large core particle 2 [stainless steel (SUS316L) powder {PSS-316L (+53 - 105 µm), volume average particle diameter of 80 µm, manufactured by SANYO SPECIAL STEEL Co., Ltd.}].

Using the thus-obtained powder material 2 for solid freeform fabrication, a solid freeform fabrication object and a sintered compact were manufactured in the same manner as in Example 1.

### Example 3

A powder material 3 for solid freeform fabrication was manufactured in the same manner as in Example 1 except that the large core particle 1 was replaced with a large core particle 3 [stainless steel (SUS316L) powder {PSS-316L (+20 - 53 µm), volume average particle diameter: 45 µm, manufactured by SANYO SPECIAL STEEL Co., Ltd.}].

Using the thus-obtained powder material 3 for solid freeform fabrication, a solid freeform fabrication object and a sintered compact were manufactured in the same manner as in Example 1.

### Example 4

A powder material 4 for solid freeform fabrication was manufactured in the same manner as in Example 1 except that the small core particle 1 was replaced with a small core particle 2 [stainless steel (SUS316L) powder {PSS-316L (-20 µm), volume average particle diameter: 13 µm, manufactured by SANYO SPECIAL STEEL Co., Ltd.}].

Using the thus-obtained powder material 4 for solid freeform fabrication, a solid freeform fabrication object and a sintered compact were manufactured in the same manner as in Example 1.

### Example 5

A powder material 5 for solid freeform fabrication was manufactured in the same manner as in Example 2 except that the small core particle 1 was replaced with a small core particle 2 [stainless steel (SUS316L) powder {PSS-316L (-20 µm), volume average particle diameter: 13 µm, manufactured by SANYO SPECIAL STEEL Co., Ltd.}].

Using the thus-obtained powder material 5 for solid freeform fabrication, a solid freeform fabrication object and a sintered compact were manufactured in the same manner as in Example 1.

### Example 6

A powder material 6 for solid freeform fabrication was obtained in the same manner as in Example 3 except that the volume ratio of the large particle 3 and the volume ratio of the small particle 1 were respectively 55 percent and 45 percent.

Using the thus-obtained powder material 6 for solid freeform fabrication, a solid freeform fabrication object and a sintered compact were manufactured in the same manner as in Example 1.

### Example 7

A powder material 7 for solid freeform fabrication was obtained in the same manner as in Example 3 except that the volume ratio of the large particle 3 and the volume ratio of the small particle 1 were respectively 65 percent and 35 percent.

Using the thus-obtained powder material 6 for solid freeform fabrication, a solid freeform fabrication object and a sintered compact were manufactured in the same manner as in Example 1.

### Example 8

A powder material 8 for solid freeform fabrication was obtained in the same manner as in Example 3 except that the volume ratio of the large particle 3 and the volume ratio of the small particle 1 were respectively 85 percent and 15 percent.

Using the thus-obtained powder material 7 for solid freeform fabrication, a solid freeform fabrication object and a sintered compact were manufactured in the same manner as in Example 1.

### Example 9

A powder material 9 for solid freeform fabrication was obtained in the same manner as in Example 3 except that polyacrylic acid (JURYMER® AC-10, manufactured by TOAGOSEI CO., LTD.) as a binder resin.

Using the thus-obtained powder material 9 for solid freeform fabrication, a solid freeform fabrication object and a sintered compact were manufactured in the same manner as in Example 1.

### Example 10

A powder material 10 for solid freeform fabrication was obtained in the same manner as in Example 3 except that sodium carboxymethyl cellulose (CELLOGEN 5A, manufactured by DKS Co. Ltd.) as a binder resin.

Using the thus-obtained powder material 10 for solid freeform fabrication, a solid freeform fabrication object and a sintered compact were manufactured in the same manner as in Example 1.

### Example 11

A powder material for solid freeform fabrication 11 was manufactured in the same manner as in Example 2 except that the small core particle 1 was replaced with a mixture of the small core particle 1 and the small core particle 2 [stainless steel (SUS316L) powder (PSS-316L (-20 µm), a volume average particle diameter: 13 µm, manufactured by SANYO SPECIAL STEEL Co., Ltd.} with a volume ratio (the small core particle 1 to the small core particle 2) of 3 percent to 22 percent.

Using the thus-obtained powder material 11 for solid freeform fabrication, a solid freeform fabrication object and a sintered compact were manufactured in the same manner as in Example 1.

### Example 12

### Preparation of Liquid Material 2 for Solid Freeform Fabrication

60 parts of water, 35 parts of 1,2-butane diol (manufactured by Tokyo Chemical Industry Co. Ltd.), and 5 parts of polyvinyl alcohol (PVA-205C, manufactured by KURARAY CO., LTD.) were mixed and stirred to prepare a liquid material 2 for solid freeform fabrication.

A powder material 12 for solid freeform fabrication was obtained in the same manner as in Example 3 except that the large core particle 3 and the small core particle 1 were used as the large particle and the small particle with no binder resin coated and the liquid material 2 for solid freeform fabrication was used.

Using the thus-obtained powder material 12 for solid freeform fabrication, a solid freeform fabrication object and a sintered compact were manufactured in the same manner as in Example 1.

### Example 13

A powder material 13 for solid freeform fabrication was obtained in the same manner as in Example 3 except that the large core particle 3 was changed to the large core particle 4 (EXCELICA SE-40, volume average particle diameter: 40 µm, manufactured by Tokuyama Corporation) and the small core particle 1 was changed to the small core particle 3 (EXCELICA SE-8, volume average particle diameter: 8 µm, manufactured by Tokuyama Corporation).

Using the thus-obtained powder material 13 for solid freeform fabrication, a solid freeform fabrication object and a sintered compact were manufactured in the same manner as in Example 1.

### Comparative Example 1

A powder material 14 for solid freeform fabrication was obtained in the same manner as in Example 3 except that the volume ratio of the large particle 3 was 100 percent without using the small core particle 1.

Using the thus-obtained powder material 14 for solid freeform fabrication, a solid freeform fabrication object and a sintered compact were manufactured in the same manner as in Example 1.

### Comparative Example 2

A powder material 15 for solid freeform fabrication was obtained in the same manner as in Example 3 except that the volume ratio of the large particle 3 and the volume ratio of the small particle 1 were 50 percent and 50 percent.

Using the thus-obtained powder material 15 for solid freeform fabrication, a solid freeform fabrication object and a sintered compact were manufactured in the same manner as in Example 1.

### Comparative Example 3

A powder material 16 for solid freeform fabrication was manufactured in the same manner as in Example 3 except that the large core particle 3 was replaced with the large core particle 5 [stainless steel (SUS316L) powder {PSS-316L (-20 µm), volume average particle diameter: 13 µm, manufactured by SANYO SPECIAL STEEL Co., Ltd.}].

Using the thus-obtained powder material 16 for solid freeform fabrication, a solid freeform fabrication object and a sintered compact were manufactured in the same manner as in Example 1.

### Comparative Example 4

A powder material 17 for solid freeform fabrication was manufactured in the same manner as in Example 3 except that the small core particle 1 was replaced with the small core particle 2 [stainless steel (SUS316L) powder (PSS-316L (-20 µm), volume average particle diameter: 13 µm, manufactured by SANYO SPECIAL STEEL Co., Ltd.)].

Using the thus-obtained powder material 17 for solid freeform fabrication, a solid freeform fabrication object and a sintered compact were manufactured in the same manner as in Example 1.

### Comparative Example 5

A powder material 18 for solid freeform fabrication was manufactured in the same manner as in Example 1 except that the small core particle 1 was replaced with a small core particle 3 [stainless steel (SUS316L) powder {PSS-316L (+53 - 105 µm), volume average particle diameter: 80 µm, manufactured by SANYO SPECIAL STEEL Co., Ltd.}].

Using the thus-obtained powder material 18 for solid freeform fabrication, a solid freeform fabrication object and a sintered compact were manufactured in the same manner as in Example 1.

Next, the large particles and the small particles of Examples 1 to 13 and the Comparative Examples 1 to 5 were measured in the following manner. The results of the volume average particle diameter, the thickness of coating, and the coverage ratio are shown in Table 1-1 to Table 3.

### Volume Average Particle Diameter

The volume average particle diameter of the large core particles, large particles, small core particles, and small particles were measured by using a laser diffraction/diffusion type particle size distribution measuring device (Microtrac MT3000II series, manufactured by MicrotracBEL Corp.) to obtain a cumulative volume distribution curve. The volume average particle diameter (Dv) was obtained from thus-obtained cumulative volume curve.

### Coverage Thickness (Average Thickness)

The surface of each of the powder material for solid freeform fabrication was polished with emery paper and thereafter the surface was polished with a wet cloth to dissolve the resin portion to obtain a sample for observation for coverage thickness (average thickness). Next, the border between the core portion and the resin portion exposed to the surface was observed by a field-emission-type scanning electron microscope (FE-SEM) and the distance between the surface of the resin portion and the border was measured as the coverage thickness. Thereafter, the average of ten measured points was calculated and determined as the coverage thickness (average thickness).

### Surface Coverage Factor

Using a field-emission-type scanning electron microscope (FE-SEM), an Energy Selective Backscatter (ESB) image was taken under the following conditions with a field of vision in which the number of each powder material for solid freeform fabrication was about ten in the image, followed by image processing of digitization utilizing Image J software. The black portion was defined as the coverage portion and the white portion was defined as the core portion. The ratio of {(black portion area)/(black portion area + white portion area) in a particle} × 100 was calculated to obtain the ratio. 10 particles were subject to the measuring and the average value of the 10 particles was determined as the coverage factor (percent).

### SEM Observation Condition

- Signal: ESB (Backscattered Electron Image)
- EHT: 0.80 kV
- ESB Grid: 700 V
- WD: 3.0 mm
- Aperture Size: 30.00 µm
- Contrast: 80 percent
- Magnification: set for each sample in order to have around 10 particles in the horizontal direction of screen

**Table 1-1**

| | Large particle | | | | | |
|---|---|---|---|---|---|---|
| | Large particle No. | Large core particle | | | | |
| | | Large core particle No. | Material of core | Manufactured by | Product name | Volume average particle diameter (µm) |
| Example 1 | 1 | 1 | SUS316L | SANYO SPECIAL STEEL Co., Ltd. | PSS-316L (+63 - 210 µm) | 150 |
| Example 2 | 2 | 2 | SUS316L | SANYO SPECIAL STEEL Co., Ltd. | PSS-316L (+53 - 105 µm) | 80 |
| Example 3 | 3 | 3 | SUS316L | SANYO SPECIAL STEEL Co., Ltd. | PSS-316L (+20 - 53 µm) | 45 |
| Example 4 | 1 | 1 | SUS316L | SANYO SPECIAL STEEL Co., Ltd. | PSS-316L (+63 - 210 µm) | 150 |
| Example 5 | 2 | 2 | SUS316L | SANYO SPECIAL STEEL Co., Ltd. | PSS-316L (+53 - 105 µm) | 80 |
| Example 6 | 3 | 3 | SUS316L | SANYO SPECIAL STEEL Co., Ltd. | PSS-316L (+20 - 53 µm) | 45 |
| Example 7 | 3 | 3 | SUS316L | SANYO SPECIAL STEEL Co., Ltd. | PSS-316L (+20 - 53 µm) | 45 |
| Example 8 | 3 | 3 | SUS316L | SANYO SPECIAL STEEL Co., Ltd. | PSS-316L (+20 - 53 µm) | 45 |
| Example 9 | 3 | 3 | SUS316L | SANYO SPECIAL STEEL Co., Ltd. | PSS-316L (+20 - 53 µm) | 45 |
| Example 10 | 3 | 3 | SUS316L | SANYO SPECIAL STEEL Co., Ltd. | PSS-316L (+20 - 53 µm) | 45 |
| Example 11 | 2 | 2 | SUS316L | SANYO SPECIAL STEEL Co., Ltd. | PSS-316L (+53 - 105 µm) | 80 |
| Example 12 | 3 | 3 | SUS316L | SANYO SPECIAL STEEL Co., Ltd. | PSS-316L (+20 - 53 µm) | 45 |
| Example 13 | 4 | 4 | Silica | Tokuyama Corporation | EXCELICA SE-40 | 40 |
| Comparati ve Example 1 | 3 | 3 | SUS316L | SANYO SPECIAL STEEL Co., Ltd. | PSS-316L (+20 - 53 µm) | 45 |
| Comparati ve Example 2 | 3 | 3 | SUS316L | SANYO SPECIAL STEEL Co., Ltd. | PSS-316L (+20 - 53 µm) | 45 |
| Comparati ve Example 3 | 5 | 5 | SUS316L | SANYO SPECIAL STEEL Co., Ltd. | PSS-316L (-20 µm) | 13 |
| Comparati ve Example 4 | 3 | 3 | SUS316L | SANYO SPECIAL STEEL Co., Ltd. | PSS-316L (+20 - 53 µm) | 45 |
| Comparati ve Example 5 | 1 | 1 | SUS316L | SANYO SPECIAL STEEL Co., Ltd. | PSS-316L (+63 - 210 µm) | 150 |

**Table 1-2**

| | Large particle | | | | |
|---|---|---|---|---|---|
| | Large particle No. | Binder resin | | | Volume average particle diameter (µm) of large particle |
| | | Kind | Coverage thickness (nm) | Coverage ratio (percent) | |
| Example 1 | 1 | Polyvinyl alcohol | 170 | 86 | 153 |
| Example 2 | 2 | Polyvinyl alcohol | 182 | 82 | 84 |
| Example 3 | 3 | Polyvinyl alcohol | 202 | 91 | 47 |
| Example 4 | 1 | Polyvinyl alcohol | 170 | 86 | 153 |
| Example 5 | 2 | Polyvinyl alcohol | 188 | 82 | 84 |
| Example 6 | 3 | Polyvinyl alcohol | 202 | 91 | 47 |
| Example 7 | 3 | Polyvinyl alcohol | 202 | 91 | 47 |
| Example 8 | 3 | Polyvinyl alcohol | 202 | 91 | 47 |
| Example 9 | 3 | Polyacrylic acid | 168 | 81 | 48 |
| Example 10 | 3 | Carboxymethyl cellulose Na | 155 | 78 | 48 |
| Example 11 | 2 | Polyvinyl alcohol | 188 | 82 | 84 |
| Example 12 | 3 | - | - | - | 45 |
| Example 13 | 4 | Polyvinyl alcohol | 225 | 98 | 52 |
| Comparative Example 1 | 3 | Polyvinyl alcohol | 202 | 91 | 47 |
| Comparative Example 2 | 3 | Polyvinyl alcohol | 202 | 91 | 47 |
| Comparative Example 3 | 5 | Polyvinyl alcohol | 178 | 88 | 15 |
| Comparative Example 4 | 3 | Polyvinyl alcohol | 202 | 91 | 47 |
| Comparative Example 5 | 1 | Polyvinyl alcohol | 170 | 86 | 153 |

**Table 2-1**

| | Small particle | | | | | |
|---|---|---|---|---|---|---|
| | Small particle No. | Small core particle | | | | |
| | | Small core particle No. | Material of core | Manufactured by | Product name | Volume average particle diameter (µm) |
| Example 1 | 1 | 1 | SUS316L | SANYO SPECIAL STEEL Co., Ltd. | PSS-316L (-10 µm) | 8 |
| Example 2 | 1 | 1 | SUS316L | SANYO SPECIAL STEEL Co., Ltd. | PSS-316L (-10 µm) | 8 |
| Example 3 | 1 | 1 | SUS316L | SANYO SPECIAL STEEL Co., Ltd. | PSS-316L (-10 µm) | 8 |
| Example 4 | 2 | 2 | SUS316L | SANYO SPECIAL STEEL Co., Ltd. | PSS-316L (-20 µm) | 13 |
| Example 5 | 2 | 2 | SUS316L | SANYO SPECIAL STEEL Co., Ltd. | PSS-316L (-20 µm) | 13 |
| Example 6 | 1 | 1 | SUS316L | SANYO SPECIAL STEEL Co., Ltd. | PSS-316L (-10 µm) | 8 |
| Example 7 | 1 | 1 | SUS316L | SANYO SPECIAL STEEL Co., Ltd. | PSS-316L (-10 µm) | 8 |
| Example 8 | 1 | 1 | SUS316L | SANYO SPECIAL STEEL Co., Ltd. | PSS-316L (-10 µm) | 8 |
| Example 9 | 1 | 1 | SUS316L | SANYO SPECIAL STEEL Co., Ltd. | PSS-316L (-10 µm) | 8 |
| Example 10 | 1 | 1 | SUS316L | SANYO SPECIAL STEEL Co., Ltd. | PSS-316L (-10 µm) | 8 |
| Example 11 | 1 | 1 | SUS316L | SANYO SPECIAL STEEL Co., Ltd. | PSS-316L (-10 µm) | 8 |
| | 2 | 2 | SUS316L | SANYO SPECIAL STEEL Co., Ltd. | PSS-316L (-20 µm) | 13 |
| Example 12 | 1 | 1 | SUS316L | SANYO SPECIAL STEEL Co., Ltd. | PSS-316L (-10 µm) | 8 |
| Example 13 | 3 | 3 | Silica | Tokuyama Corporation | EXCELICA SE-8 | 8 |
| Comparative Example 1 | - | - | - | - | - | - |
| Comparative Example 2 | 1 | 1 | SUS316L | SANYO SPECIAL STEEL Co., Ltd. | PSS-316L (-10 µm) | 8 |
| Comparative Example 3 | 1 | 1 | SUS316L | SANYO SPECIAL STEEL Co., Ltd. | PSS-316L (-10 µm) | 8 |
| Comparative Example 4 | 2 | 2 | SUS316L | SANYO SPECIAL STEEL Co., Ltd. | PSS-316L (-20 µm) | 13 |
| Comparative Example 5 | 3 | 3 | SUS316L | SANYO SPECIAL STEEL Co., Ltd. | PSS-316L (+53 - 105 µm) | 80 |

**Table 2-2**

| | | Small particle | | | |
|---|---|---|---|---|---|
| | Small particle No. | Binder Resin | | | Volume average particle diameter (µm) of small particle |
| | | Kind | Coverage thickness (nm) | Coverage ratio (percent) | |
| Example 1 | 1 | Polyvinyl alcohol | 161 | 84 | 9.2 |
| Example 2 | 1 | Polyvinyl alcohol | 161 | 84 | 9.2 |
| Example 3 | 1 | Polyvinyl alcohol | 161 | 84 | 9.2 |
| Example 4 | 2 | Polyvinyl alcohol | 178 | 88 | 15 |
| Example 5 | 2 | Polyvinyl alcohol | 178 | 88 | 15 |
| Example 6 | 1 | Polyvinyl alcohol | 161 | 84 | 9.2 |
| Example 7 | 1 | Polyvinyl alcohol | 161 | 84 | 9.2 |
| Example 8 | 1 | Polyvinyl alcohol | 161 | 84 | 9.2 |
| Example 9 | 1 | Polyacrylic acid | 166 | 81 | 9.2 |
| Example 10 | 1 | Carboxymethyl cellulose Na | 157 | 72 | 9.2 |
| Example 11 | 1 | Polyvinyl alcohol | 161 | 84 | 9.2 |
| | 2 | Polyvinyl alcohol | 178 | 88 | 15 |
| Example 12 | 1 | - | - | - | 8 |
| Example 13 | 3 | Polyvinyl alcohol | 135 | 76 | 8.5 |
| Comparative Example 1 | - | - | - | - | - |
| Comparative Example 2 | 1 | Polyvinyl alcohol | 161 | 84 | 11 |
| Comparative Example 3 | 1 | Polyvinyl alcohol | 161 | 84 | 11 |
| Comparative Example 4 | 2 | Polyvinyl alcohol | 178 | 88 | 15 |
| Comparative Example 5 | 3 | Polyvinyl alcohol | 188 | 82 | 84 |

**Table 3**

| | Powder material for solid freeform fabrication | | | | | Liquid material for solid freeform fabrication No, |
|---|---|---|---|---|---|---|
| | Powder material for solid freeform fabrication No. | Large particle No. | Volume ratio (percent) of large particle | Small particle No. | Volume ratio (percent) of small particle | |
| Example 1 | Powder material 1 | 1 | 75 | 1 | 25 | Liquid material 1 |
| Example 2 | Powder material 2 | 2 | 75 | 1 | 25 | Liquid material 1 |
| Example 3 | Powder material 3 | 3 | 75 | 1 | 25 | Liquid material 1 |
| Example 4 | Powder material 4 | 1 | 75 | 2 | 25 | Liquid material 1 |
| Example 5 | Powder material 5 | 2 | 75 | 2 | 25 | Liquid material 1 |
| Example 6 | Powder material 6 | 3 | 55 | 1 | 45 | Liquid material 1 |
| Example 7 | Powder material 7 | 3 | 65 | 1 | 35 | Liquid material 1 |
| Example 8 | Powder material 8 | 3 | 85 | 1 | 15 | Liquid material 1 |
| Example 9 | Powder material 9 | 3 | 75 | 1 | 25 | Liquid material 1 |
| Example 10 | Powder material 10 | 3 | 75 | 1 | 25 | Liquid material 1 |
| Example 11 | Powder material 11 | 2 | 75 | 1 | 3 | Liquid material 1 |
| | | | | 2 | 22 | |
| Example 12 | Powder material 12 | 3 | 75 | 1 | 25 | Liquid material 2 |
| Example 13 | Powder material 13 | 4 | 75 | 3 | 25 | Liquid material 1 |
| Comparative Example 1 | Powder material 14 | 3 | 100 | - | - | Liquid material 1 |
| Comparative Example 2 | Powder material 15 | 3 | 50 | 1 | 50 | Liquid material 1 |
| Comparative Example 3 | Powder material 16 | 5 | 75 | 1 | 25 | Liquid material 1 |
| Comparative Example 4 | Powder material 17 | 3 | 75 | 2 | 25 | Liquid material 1 |
| Comparative Example 5 | Powder material 19 | 1 | 75 | 3 | 25 | Liquid material 1 |

Next, dimension accuracy of each of the manufactured solid freeform fabrication objects and sintered compact were evaluated in the following manner. The results are shown in Table 4.

### Dimension Accuracy of Solid Freeform Fabrication Object

The obtained solid freeform fabrication object was visually observed to evaluate the dimension accuracy thereof. The results were rated according to the following criteria.

### Evaluation Criteria

A: Solid freeform fabrication object had smooth surface with less concavo-convex portions and without warp
B: Solid freeform fabrication object had slightly rough surface with slight warp
C: Solid freeform fabrication object had apparently rough surface with apparent warp
D: Solid freeform fabrication object had roundish surface, far away from target form
D is not allowable.

### Dimension Accuracy of Solid Freeform Fabrication Object

The obtained sintered compact was measured about how much it deviated from the target form based on the fabrication data to evaluate the dimension accuracy thereof according to the following criteria.

### Evaluation Criteria

A: Deviation within - 1 to +1 percent of target
B: Deviation within -2 to less than -1 percent and more than 1 to 2 percent
C: Deviation within -3 to less than -2 percent and more than 2 to 3 percent
D: Deviation -3 percent or less and 3 percent or more
A, B, and C are allowable.

### Total Evaluation

Based on the evaluation results of the dimension accuracy of the obtained solid freeform fabrication object and the obtained sintered compact, total evaluation of the dimension accuracy was made based on the following evaluation criteria using the worst of the two.

### Evaluation Criteria

A: Dimension accuracy of both solid freeform fabrication object and sintered compact is rated as A
B: Dimension accuracy of the worst of solid freeform fabrication object and sintered compact is rated as B
C: Dimension accuracy of the worst of solid freeform fabrication object and sintered compact is rated as C
D: Dimension accuracy of the worst of solid freeform fabrication object and sintered compact is rated as D
A, B, and C are allowable.

**Table 4**

| | Dimension accuracy of solid freeform fabrication object | Dimension accuracy of solid freeform fabrication object | | Total evaluation |
|---|---|---|---|---|
| | | Deviation from target | Interpretation | |
| Example 1 | B | 2.8 percent | C | C |
| Example 2 | B | 2.6 percent | C | C |
| Example 3 | A | 0.6 percent | A | A |
| Example 4 | B | 2.5 percent | C | C |
| Example 5 | B | 1.3 percent | B | B |
| Example 6 | B | 1.6 percent | B | B |
| Example 7 | A | 0.4 percent | A | A |
| Example 8 | A | 0.8 percent | A | A |
| Example 9 | A | 1.8 percent | B | B |
| Example 10 | A | 1.4 percent | B | B |
| Example 11 | A | 0.8 percent | A | A |
| Example 12 | C | 2.1 percent | c | c |
| Example 13 | B | 1.6 percent | B | B |
| Comparative Example 1 | D | 0.8 percent | B | D |
| Comparative Example 2 | D | 2.3 percent | C | D |
| Comparative Example 3 | D | 3.6 percent | D | D |
| Comparative Example 4 | B | 4.6 percent | D | D |
| Comparative Example 5 | B | 5.2 percent | D | D |

Embodiments of the present disclosure are, for example, as follows.
1. A powder material for solid freeform fabrication includes at least two kinds of particles, which are large particles and small particles having a diameter of 1/5 or less of that of the large particles, characterized in that the large particles have a larger volume ratio than the small particles.
2. The powder material according to 1 mentioned above, characterized in that the large particles have a volume ratio of from 65 to 85 percent and the small particles have a volume ratio of from 15 to 35 percent.
3. The powder material according to 1 or 2 mentioned above, characterized in that the large particles have a volume average particle diameter of from 25 to 85 µm and the small particles have a volume average particle diameter of less than 20 µm.
4. The powder material according to any one of 1 to 3 mentioned above, characterized in that the large particles have a volume average particle diameter of from 35 to 50 µm and the small particles have a volume average particle diameter of from 5 to 12 µm.
5. The powder material according to any one of 1 to 4 mentioned above, characterized in that the large particle includes a large core particle and a first resin and the small particle includes a small core particle and a second resin.
6. The powder material according to 5 mentioned above, characterized in that the large particle includes a large core particle covered with the first resin and the small particle includes a small core particle covered with the second resin.
7. The powder material according to claim 6, characterized in that each of the large core particle and the small core particle is independently selected from the group consisting of a metal particle, a ceramic particle, resin material, and a magnetic material.
8. The powder material according to any one of 5 to 7 mentioned above, characterized in that both the first resin and the second resin include water soluble resins.
9. The powder material for solid freeform fabrication according to 8 mentioned above, characterized in that the water soluble resin is at least one member selected from the group consisting of a polyvinyl alcohol resin, a polyacrylic resin, and a cellulose resin.
10. A material set for solid freeform fabrication includes the powder material for solid freeform fabrication of any one of 1 to 9 mentioned above and a liquid material for solid freeform fabrication including at least one of water and a water-soluble solvent.
11. The material set according to 10 mentioned above, characterized in that the first solid freeform fabrication liquid material includes a cross-linking agent.
12. The material set according to 10 or 11 mentioned above, characterized in that the cross-linking agent is at least one of water soluble cross-linking agent and metal salts.
13. The material set according to any one of 10 to 12 mentioned above, characterized in that the liquid material for solid freeform fabrication includes a resin.
14. A device for manufacturing a solid freeform fabrication object includes a powder material layer forming device to form a layer of the powder material for solid freeform fabrication using the powder material for solid freeform fabrication in the material set of any one of 10 to 13 mentioned above and a liquid material applying device to apply the liquid material for solid freeform fabrication in the material set of any one of 10 to 13 mentioned above to the layer of the powder material for solid freeform fabrication.
15. The device according to 14 mentioned above, characterized in that the liquid material applying device operates on an inkjet method.
16. The method according to 14 or 15 mentioned above, further includes a sintering device.
17. A method of manufacturing a solid freeform fabrication object includes forming a layer of the powder material for solid freeform fabrication using the powder material for solid freeform fabrication in the material set of any one of 10 to 13 mentioned above and applying the liquid material for solid freeform fabrication in the material set of any one of 10 to 13 mentioned above to the layer of the powder material for solid freeform fabrication.
18. The method according to 17 mentioned above, characterized in that the step of applying the liquid material is conducted by an inkjet method.
19. The method according to 17 or 18 mentioned above further includes sintering the solid freeform fabrication object.
20. A sintered compact characterized by sintering the solid freeform fabrication object formed by using the material set of any one of 10 to 13 mentioned above.

According to the present invention, powder material for solid freeform fabrication is provided with which a solid freeform fabrication object having a high dimension accuracy is stably produced.

Having now fully described embodiments of the present disclosure, it will be apparent to one of ordinary skill in the art that many changes and modifications can be made thereto without departing from the spirit and scope of embodiments of the disclosure as set forth herein.

## Claims

1. A powder material for solid freeform fabrication comprising:
large particles; and
small particles having a diameter of 1/5 or less of that of the large particles,
**characterized in that** the large particles have a larger volume ratio than the small particles.

2. The powder material according to claim 1, **characterized in that** the large particles have a volume ratio of from 65 to 85 percent and the small particles have a volume ratio of from 15 to 35 percent.

3. The powder material according to claim 1 or 2, **characterized in that** the large particles have a volume average particle diameter of from 25 to 85 µm and the small particles have a volume average particle diameter of less than 20 µm.

4. The powder material according to any one of claims 1 to 3, **characterized in that** the large particles have a volume average particle diameter of from 35 to 50 µm and the small particles have a volume average particle diameter of from 5 to 12 µm

5. The powder material according to any one of claims 1 to 4, **characterized in that** each of the large particles comprises a large core particle and a first resin and each of the small particle comprises a small core particle and a second resin.

6. The powder material according to claim 5, **characterized in that** each of the large core particles and each of the small core particles are independently selected from the group consisting of a metal particle, a ceramics particle, resin material, and magnetic material.

7. The powder material according to claim 5 or 6, **characterized in that** the first resin and the second resin each include a water soluble resin.

8. A material set for solid freeform fabrication comprising:
the powder material for solid freeform fabrication of any one of claims 1 to 7; and
a liquid material for solid freeform fabrication comprising at least one of water and a water-soluble solvent.

9. A device for manufacturing a solid freeform fabrication object comprising:
a powder material layer forming device configured to form a layer of the powder material in the material set of claim 8; and
a liquid material applying device configured to apply the liquid material in the material set of claim 8 to the layer of the powder material.

10. A method of manufacturing a solid freeform fabrication object comprising:
forming a layer of the powder material in the material set of claim 8; and
applying the liquid material in the material set of claim 8 to the layer of the powder material.
